# EUROPEAN PATENT APPLICATION

(11) **EP 1 271 227 A1**
(43) Date of publication of application: **02.01.2003**
(21) Application number: 01650076.1
(22) Date of filing: 26.06.2001
(51) Int. Cl.: G02F 1/155, H05K 3/12, B41J 2/01

(54) **Electrochromic display for high resolution and method of producing the same**

(71) Applicant: Nanomat Limited, Belfield, Dublin 4 (IE)
(72) Inventor: Walder, Lorenz, 49078 Osnabrück (DE); Möller, Martin, 49074 Osnabrück (DE)
(74) Representative: Lane, Cathal Michael

(57) **Abstract**

An electrode construction for incorporation into an electrochromic display device with a substrate; an electrochromic material (102) applied to the substrate (101) in a spatially resolved manner. The electrochromic material is (a) applied to the substrate with a resolution of greater than about 75 dpi and (b) the spatial resolution is obtained by a non-photolithographic method. The substrate may have a mesoporous morphology. Printing methods such as ink-jet printing may be used. Other materials such as masking materials, charge storing materials, complementary electrochromic materials and the mesoporous material itself may be set down by ink-jet methods. The electrodes construction may be included in electrochromic devices. The resolution obtained is high and devices incorporating these materials may be addressable.

## Description

### Field of the Invention

The present invention relates to displays displaying high resolution information, in particular to electrochromic displays displaying high resolution information, either in the form of fixed or variable images. The invention also relates to methods for depositing the electrochromic materials onto the substrates and to display created by these methods. The present invention further relates to displays employing large surface area materials especially mesoporous materials. An important type of mesoporous materials are constructed of fused particles (usually nanoparticles) which are typically of a size measured in nanometers. If the fused particles are crystalline in nature (they may be amorphorous) then the material is often referred to as nanocrystalline. The mesoporous materials employed herein may be nanocrystalline but are in any case constructed of nanoparticles. Desirably the materials are nanocrystalline and are more preferably in the form of a thin film. The invention also relates to methods for depositing the materials including those for forming nanostructures on substrates for example deposition of materials of the display and in particular to the deposition of mesoporous materials (onto substrates) and electrochromic materials (usually onto a mesoporous layer). The mesoporous material is optionally covered with surface-confined electrochromic material. The invention also relates to displays created by these methods. Particularly of interest are "sandwich structure" displays. Also included are laterally arranged (e.g. interdigitated) displays which may also be produced by the methods employed. One particular area of interest is in matrix addressable displays.

The invention enables the fabrication of switchable, high resolution icons or alphanumeric information using such deposition techniques. It also allows deposition of materials in a manner consistent with the fabrication of high resolution matrix addressable displays for example by the deposition of individual pixels of electrochromic material.

### Background to the Invention

Electrochromic devices and materials employed in such devices such as electrochromic materials are well known to those skilled in the art. Electrochromic devices are electrochemical cells that comprise electrochromic materials either surface confined or in solution, electrolyte and redox mediator (or a surface confined charge transfer layer) as elements of an electrochemical system, and provide a means to change the light absorption properties of the device such that a colour change is observable as a result of the electrochemical reaction at one (or both) electrode(s). Many different types of electrochromic device and many types of electrochromophores and other materials for incorporation in electrochromic devices have been described. Electrochromic devices have been used and proposed for a good many applications, including smart windows, automatically dimmable mirrors, displays and other end use applications.

Much effort has gone into the creation of electrochromic displays as is evidenced by some representative prior art set out below and indeed by the background information set forth in each document discussed.

WO 91/13381 describes a display having an array of matrix addressable pairs of electrodes which are mounted face up on the substrate. Electrochromic/electroluminescent materials form the pixellated display. The electrodes are put down by deposition, evaporation or sputtering through a mask. The electrochromic materials (including WO₃ and viologen based materials) are put down by deposition. The WO₃ materials are applied by sputtering and selectivity on deposition is achieved by utilising a mask or a photoresist material. Deposition of other materials is achieved by immersion in appropriate solutions, and applying if appropriate a potential across the solution. The methods of construction of displays described in this document involve many photolithographic steps including the setting down of a photoresist material one or more times, together with etching processes. The process being multistage is thus relatively cumbersome and expensive. It is noted also that the methods of the invention are directed toward the provision of laterally arranged interdigitated electrodes in the display. The performance of polymers such as those described in electrochromic devices is not satisfactory for practical applications in displays.

US Patent No. 4,146,876 describes a matrix addressed electrochromic display. The display is a construction having parallel rows and perpendicular thereto parallel rows of columns of electrodes. The device is sealed to contain an electrochromic fluid. The materials used for the electrodes are gold conductors formed on an electrode substrate or in their entirety of gold or platinum.

US Patent No. 5,049,868 describes a planar matrix of electrochromic display picture elements which are said to be operated by supplying power via a high current planar drive electrode and a counter electrode. Each display dot is isolated by a thin film transistor. The picture elements are addressed by low current leads.

Electrochromic devices based on mesoporous nanocrystalline metal oxide electrodes modified with a monomolecular layer of an electrochromic compound (e.g. a viologen equipped with a TiO₂ anchoring group) have been described in Campus, F., Bonhôte, P., Grätzel, M., Heinen, S., Walder, L., *"Electrochromic devices based on surface-modified nanocrystalline TiO*_{*2*} *thin-film electrodes",* Solar Energy Materials & Solar Cells, 1999. 56(3-4): p. 281-297. The chemical modification is achieved by immersing the mesoporous nanocrystalline electrode in a bath containing the modifying material for a time ranging from approximately 10 minutes to approximately 12 hours.

The display described in EP 0 886 804 consists of individually addressed electrochromic segments, i.e. each segment on the working electrode is electrically separated from the neighbouring segments and has its own electrical contact. Such systems allow for the display of graphical information, however the resolution is limited by the need to address each segment individually, and no means to prepare images with higher resolution is described.

J.P. Coleman *et al.* Solar Energy Materials and Solar Cells 56 (1999) 375-394 investigates the use of antimony-doped tin oxide powders as electrochromic materials. In the experimental work the antimony-doped tin oxide is dispersed in fluoroelastomeric binder as part of an electrode structure. A product called Mitsubishi W-1 is referred to which consists of a TiO₂ core with a coating of a nanophase antimony-doped tin oxide which is said to have an average crystallite size of 54 Å. The material is dispersed within a polymer binder and thus cannot be considered to be a porous material. Screen printing is used to print the antimony-doped tin oxide on silica. The electrode arrangement used is a lateral interdigitated one.

J.P. Coleman *et al.* Solar Energy Materials and Solar Cells 56 (1999) 395-418 describe an interdigitated electrode approach to creating a display. The electrodes are arranged side by side and face up on a substrate. The structure employed eliminates the requirement for a transparent electrode. The sandwich structure of the display employed has the following structure listed in the order in which the "layers" are arranged each superimposed on the next (unless otherwise indicated): (i) substrate (clear polyester); (ii) interdigitated laterally arranged working and counter electrodes (side by side and separated by insulators); (iii) a silver/carbon ink layer; (iv) a carbon ink layer; (v) a conductive metal oxide dispersion; (vi) an electrochromic layer (based on Prussian Blue compounds); (vii) a gelled electrolyte; and (viii) a transparent film. Ground indium-tin oxide is described as being used as a dispersion in a copolymer as an ink. The document does not mention a matrix addressable system or the use of nanostructured materials.

WO 98/57228 discloses an electrochromic display. The working and counter electrodes are provided in a lateral interdigitated arrangement. A conductive coating is applied over the electrodes and an image is printed on the conductive coating (over the working electrode) using an electrochromic material such as Prussian blue. The objective of the arrangement is to achieve a structure which requires electrodes and electrochromic material only on one side of the display. It is also stated that the structure has the capability to display fine detail including "halftone" pictures which it is stated may be printed with dots. A second image may be printed onto the counter electrode which is activated when the first image is switched off. The colour of one state of the electrochromic material is matched to the background colour so that no image is seen when the matching state is activated. Methods of printing the electrochromic image onto the substrate discussed include photolithography, silk-screening, rotogravure, photogravure and flexographic printing while sputtering and evaporation through a mask are also mentioned. The electrochromic materials described include Prussian Blue which appears to be screen printed onto the substrate. It is believed that with this construction the device cannot be transmissive. The image appears to be only depositable onto the working electrode. The counter-electrodes are to the side (laterally arranged - interdigitated) rather than in sequence (a stacked sequence) as in a sandwich structure. This may limit the ultimate aspect ratio of the display. Furthermore, the ink is a disperse powder and not a large surface area porous material.

There is a need for switchable (e.g. on/off) high resolution, e.g. better than 300 ppi, which can be used for example to display graphical or alphanumeric information including e.g. icons on for example those used on the display of a cellular phone. Notably, such switchable information is described by two states, either on or off. There is a considerable advantage of a switchable icon over a switchable sign without informational content such as a simple LED lamp because the icon generally relates to the content. Moreover, switchable icons can be part of a larger electrochromic system with individually addressable subunits.

The use of screen printing techniques for the fabrication of thin films consisting exclusively of TiO₂ is well established in the fields of antireflection coatings (below 1 µm film thickness) and gas sensors (generally above 1 µm film thickness). In addition, they have been used in the preparation of solar cells based on modified mesoporous nanocrystalline materials. However the nature of screen printing, namely the pressing of paste through a mesh, limits the resolution achievable, and resolutions of the order of 300 ppi or above are not possible.

EP-A- 0 592 327 discloses a method of forming of a new solid phase in a chosen fraction of cells of a system comprising a multiplicity of electrolysis cells, in each of which one of the electrochemical reactions takes place. Passage of an electric current in one of the directions causes the formation of the said new phase. A voltage pulse is used to form the new phase.

The use of a conductive font and its application using an ink jet procedure for the fabrication of electrochromic graphical/alphanumeric information has been described in US 5,852,509. Only relatively large graphical or alphanumeric information is reported to be displayed (above ca. 1 mm). In common with WO 98/57228 above, the active area of the display is the area between the two electrodes deposited onto a single substrate; therefore the resolution limit of the display is substantially lower than the resolution of the deposition of the electrodes and the electrochromic material themselves. In addition, the architecture proposed in these inventions is not directly compatible with technologies providing fast switching speed.

As far as the present inventors are aware a non-photolithographic, high resolution process for placing an electrochromic material onto a conductive support or providing a porous material that is useful as a support for an electrochromic material, as set forth in the following disclosure, has not been disclosed to date. Furthermore an electrochromic device with the capability to display an image or graphical information with a resolution of ca. 300 ppi has not been described. Generally non-photolithographic methods to pattern electrochromic material have not been employed to do so.

Prior art suggests a relatively long time is required for chemical modification of substrate materials as disclosed in EP-A-0 886 804 or EP-A- 0 958 526, D. Cummins et al., Journal of Phys. Chem. B 104 11449(2000). This presents a problem in trying to provide more rapid techniques for the chemical modification of substrates such as for example the application of elecrochromic material. In these disclosures and related literature, adsorption of the molecular modifier takes a period of minutes or hours.

Furthermore it is not clear that electrochromic materials can be deposited without lateral migration of the material. Lateral migration tends to reduce resolution.

There is therefore a need for electrochromic displays that are able to switch images or graphical information with a high resolution, advantageously at or above 200 ppi, which are fabricated without the use of photolithographic steps and most desirably which may be employed for the patterning of transparent conductive electrodes. It is also desirable that the devices deliver performance required for technical applications. There is in particular a need for displays with an ability to switch images or graphical information with a high resolution, advantageously at or above 300 dpi. There is moreover a need for a practical, cost-effective process for preparing high-resolution electrochromic displays that does not require photolithographic steps for the patterning of transparent conductive electrodes. The main method of application of electrochromophores has been by immersion of the substrate to which the electrochromophore is to be applied, into a bath containing a solution of the electrochromophore. Immersion times of at least minutes if not hours are required to allow suitable amounts of the electrochromphore to adsorb to the substrate. Immersion techniques tend to be complicated and relatively expensive.

In summary there is thus a need for displays with a high degree of resolution, for example for the display of graphical or text information, in which small elements can be switched on and off to create changing high resolution information.

### Object of the Invention

It is object of this invention to provide electrode constructions, and other components for incorporation into electrochromic displays, electrochromic displays demonstrating high resolution switchable images, either fixed or variable, that do not require photolithographic steps to define and structure the electrochromic material. Suitably the methods allow the patterning of (transparent) conductive electrodes. It is another object of this invention to disclose a practical, cost-effective process for preparing high-resolution electrochromic displays. Transmissive displays are desirable in particular transmissive sandwich structure displays. A further object of the present invention is to provide techniques/devices that provide high contrast and long term stability of the displays, i.e. techniques that suppress loss of the electrochromophores into the bulk of the electrolyte solution.

A further object of the present invention is to provide materials suitable for application by the process of the invention. A yet further object of the invention is to provide a process for software assisted image modification to transfer a desired image to an electrochromic display of the present invention.

A particularly desirable object of this invention is to provide individually addressable segments in a larger electrochromic device, for example by pixellation, to allow for multiple image creation.

### Summary of the Invention

The present invention provides a number of electrode constructions (or configurations) suitable for incorporation in electrochromic displays.

In one aspect the invention provides an electrode construction for incorporation into an electrochromic display device comprising:
(i) a substrate;
(ii) an electrochromic material applied to the substrate in a spatially resolved manner characterised in that the electrochromic material is (a) applied to the substrate with a resolution of greater than about 75 dpi and (b) the spatial resolution is obtained by a non-photolithographic method.

Also provided is an electrode construction for incorporation into an electrochromic display device comprising:
(i) a substrate;
(ii) a charge storing material applied to the substrate in a spatially resolved manner characterised in that the charge storing material is (a) applied to the substrate with a resolution of greater than about 75 dpi and (b) the spatial resolution is obtained by a non-photolithographic method.

The charge storing (or storage) material may be electrochromic also and in certain embodiments desirably comprises at least one electrochromophore.

Further provided is an electrode construction for incorporation into an electrochromic display device comprising:
(i) a substrate;
(ii) masking material applied to the substrate in a spatially resolved manner characterised in that the masking material is (a) applied to the substrate with a resolution of greater than about 75 dpi and (b) the spatial resolution is obtained by a non-photolithographic method.

A further construction is an electrode construction for incorporation into an electrochromic display device comprising:
(i) a substrate;
(ii) an electrochromic material applied to the substrate in a spatially resolved manner with a resolution of greater than about 75 dpi, the spatial resolution being obtained by applying to the substrate by a non-photolithographic method, with a resolution of greater than about 75 dpi, a masking material, the masking material forming a negative the positive of which is subsequently developed by application of the electrochromic material.

If a suitable masking material is used the masked electrode(s) (normally at least the working electrode) could be immersed in a solution containing the electrochromic material (normally an electrochromophore) for traditional deposition from solution.

An electrode construction for incorporation into an electrochromic display device comprising:
(i) a substrate;
(ii) an electrochromic material applied to the substrate in a spatially resolved manner the electrochromic material being (a) applied to the substrate with a resolution of greater than about 75 dpi and (b) the spatial resolution being obtained by a non-photolithographic method; the non-photolithographic method comprising the steps of:
   (a) applying masking material over earlier applied electrochromic material;
   (b) removing at least some of the electrochromic material which is not masked; and
   (c) optionally subsequently removing masking material.

It is desirable in this latter embodiment that the masking material is applied in a spatially resolved manner with a resolution of greater than about 75 dpi, the spatial resolution being obtained by a non-photolithographic method.

The materials employed in the constructions above are desirably monomeric, olgiomeric or polymeric compounds.

The substrate is desirably one having a large specific surface area. One such desirable substrate is one comprising a mesoporous material. Any substrate having a mesoporous morphology is desired. The substrate could be constructed of mesoporous material. The substrate could be a support to which the mesoporous material is applied for example as a coating, as a film or as a membrane. The material is desirably a metal oxide and is preferably a crystalline form of a metal oxide. Desirable metal oxides are TiO₂, ZnO, ZrO₂ SnO_{2,} ITO (Sn: In₂ O₃), NbO₂ especially TiO₂ or SnO₂.

An electrode construction for incorporation into an electrochromic display device comprising:
(i) a substrate;
(ii) a mesoporous material applied to the substrate in a spatially resolved manner characterised in that the mesoporous material is (a) applied to the surface with a resolution of greater than about 75 dpi and (b) the spatial resolution is obtained by a non-photolithographic method.

It is preferable that in all of the constructions above that the material(s) applied is (are) applied by a printing method including screen printing methods. Suitably the method employed is ink-jetting. Ink-jet printing is one convenient method for the application of the desired material at a selected resolution. In other words one of, or any combination of, the mesoporous material and/or the electrochromic material and/or the charge storing material and/or the masking compound may (where employed) be set down by ink-jet printing. The method allows for printing of single pixels of high resolution. The invention enables the fabrication of switchable, high resolution icons or alphanumeric information using such deposition techniques. It also allows deposition of materials in a manner consistent with the fabrication of high resolution matrix addressable displays, for example by the deposition of individual pixels of electrochromic material.

In one preferred arrangement the invention provides an electrode construction for incorporation into an electrochromic display device comprising:
(i) a substrate comprised of mesoporous material;
(ii) an electrochromic material applied to the substrate in a spatially resolved manner by ink-jetting.

The substrate can be constructed of mesoporous material. Alternatively the substrate could be a support of other suitable material and the mesoporous material can be applied thereto for example by application of a dispersion of colloidal particles which form the mesoporous material. The mesoporous material put down by this method can be considered to be mechanically stable.

In the electrode constructions comprising a mesoporous material set down as above it may be desirable that electrochromic material is applied to the mesoporous material in the same spatially resolved manner (and in the same pattern). Such an arrangement could be used to generate switchable images in particular multicolour images. For example the mesoporous material could be partially or1 completely overprinted with electrochromic material. In one desired arrangement that are set down in the same spatially resolved manner (one directly upon the other).

The spatial resolution of the material(s) usually takes a patterned form. There are two main types of image which are of primary interest in the present invention. The first is fixed image and the second variable image. For fixed image display it is desirable that the patterned form is a positive or negative of the image. For variable image display the spatially resolved pattern may be any suitable array pattern (usually rows and columns). Such an array pattern is desirably adapted for matrix addressing.

It will be appreciated that mixtures/combinations of suitable materials can be used and the terms "electrochromic material" and such like when used herein include such mixtures/combinations. It should also be noted that the term "electrochromic material" includes electrochromic materials which may be applied directly and precursors of electrochromic materials which may later be activated to form electrochromic materials. The electrochromic material will usually comprise at least one electrochromophore and often a combination of electrochromophores will be used. The precursors could for example be activated thermally to form the electrochromic material. Similarly the term "mesoporous material" includes both materials which when applied directly form mesoporous material, and those materials which form mesoporous material precursors. The latter may later be activated to form the mesoporous material. Those skilled in the art will appreciate that the mesoporous material may itself be electrochromic e.g. mesoporous material comprising TiO₂ or SnO₂. However it is desirable that the electrochromic material employed in the various constructions of the invention is distinct from the mesoporous material and desirably comprises at least one further electrochromic material for example at least one electrochromophore. The electrochromic material can thus comprise electrochromophore material which is often referred to as an electrochromophore ink or dye.

The term "electrode construction" refers to a construction or configuration which is suitable for employment in an electrochromic device for an electrode function. In this respect a skilled person will know which construction(s) are suitable for employment in a device for a working electrode function or for a counter electrode function for a given end application.

In relation to the present invention the term "non-photolithographic" describes methods where the image information is put down directly at the desired resolution without the use of masking using irradiation exposure methods such as UV exposure, wet etching and development steps to protect part of the substrate or to selected parts of already deposited material to be removed.

In the case of the electrochromic material it is desirable that it anchors fast to the large specific area of the electrode substrate as compared to the lateral motion of the solution over the substrate to which it is applied. In this respect the electrochromic material is desirably at least one electrochromophore. The electrochromic material may be applied at a resolution which provides the electrochromophore within a mesopore. It is migration between mesophores which is undesirable.

In this respect it is desirable that the electrochromic material is provided with anchoring groups which act to prevent lateral diffusion of the applied electrochromic material. Particularly suited are one or more types of anchoring groups for fixing of the electrochromic material to a mesoporous material. The provision of the anchoring groups in particular assist in providing stability in the positioning of the applied material. For example a stable molecular monolayer of one or more electrochromophores can be provided.

In one preferred embodiment the electrochromic material is suitably polymerisable and/or crosslinkable after deposition. Again desirably it is at least one electrochromophore (including electrochromophore precursors) which is polymerisable and/or cross-linkable. This function aids the fixing of the materials on the substrate and may act in addition to the anchoring group to provide a stable molecular monolayer. The fact that the mesoporous material has a very high specific surface area also allows for (complete) fixation (at the region(s) of the electrode to which it is applied). These materials have higher specific surface areas as compared to non-porous materials constructed of similar materials as the internal surface area created by the porosity increases the capacity to bind. It is believed that the porosity of the mesoporous structured materials employed in the present invention is important as they provided a substrate onto which spatially resolved materials can be applied - particularly they allow for application of materials in liquid form (usually in solution) and the surface area being greater allows for better fixture of the applied liquid materials. In the case of an ink jetted dot the diffusion referred to is that of the jetted drop. It will be appreciated by those skilled in the art that the mesoporous material will usually be at least semiconducting if not electrically conductive.

The polymerisation and/or crosslinking that takes place may be a single or a multi-step process. For example the process could involve a cascade reaction. The process desirably takes place in a solvent where migration of the material applied (the anchored material) is suppressed.

It is desirable for certain applications that the electrode construction(s) employed in a device are (optically) transparent.

When two or more of the electrode constructions described above are employed in a device it may be desirable to form on a working electrode an image, the mirror image of which is formed on a counter-electrode. The mirror image could be formed by the same electrochromic material, a complementary electrochromic material (for example the materials may be complementary in a colour sense - the two together forming a different colour), or either of these together with a charge storing material.
In one embodiment the material applied to the counter electrode could be complementary to the material applied to the working electrode. For example in a sandwich cell device where an image is displayed at a position between the working and counter electrodes the pattern (e.g. an image) applied to the working electrode and that applied to the counter electrode could be mirror images of each other so that when the electrodes are arranged facing each other, the patterns (images) correlate exactly. This may improve image quality and image retention times. It will be appreciated that the on state created by an applied potential can only be maintained for a finite period and these masks display (apart from bistate stable devices) will return to the off state over that period. Prolonging the period for natural return to the off state is desirable as the device can have a potential applied to switch it to the on state and will then hold the on state for a period of at least a few minutes if not a few hours. The potential does not then have to be continually applied to hold the image (or so frequently intermittently applied to refresh the image) which will fade as the device returns to the off state.

The constructions of the invention are practical, cost-effective ones. The electrochromic material can be set down in a spatially resolved ways. The higher the spatial resolution the higher the resolution of the display in which the arrangement is incorporated.

In certain constructions of the present invention it is desirable that the electrochromic and/or the mesoporous material is set down on a conductive substrate.

The electrode construction described above may be formed by a process of the invention which includes the steps of:
(i) providing a substrate;
(ii) applying to the substrate in a spatially resolved manner with a resolution of greater than about 75 dpi and by a non-photolithographic method, one or more of the materials selected from the group consisting of: electrochromic materials, charge storing materials, masking materials and materials for forming mesoporous materials.

In particular the process may be a multistage one setting down one or more of the materials. In doing so it may be desirable to directly overprint one material on the other. In one particular desirable process it is desirable to print the mesoporous forming material and to overprint this material with the electrochromic material. Both can be applied in a spatially resolved manner as an array of dots or as the positive or negative of a desired image.

It will be appreciated that the materials set down by the present invention may be set down as layers and in particular substantially as (molecular) monolayers.

The features of the electrode constructions above including the materials employed etc. apply also to the process of the present invention. Furthermore the described embodiments of the invention may also be made by the process of the invention described above.

The invention also provides an assembly adapted to form part of a matrix addressable system comprising:
(i) a subassembly comprising at least two electrodes according to the present invention; and
(ii) a matrix of at least 4 discrete regions of electrochromic material on the subassembly, the electrochromophore material being provided in a spatially resolved manner with a resolution of greater than about 75 dpi and being applied by a non-photolithographic method.

This arrangement can allow for individual address of the four regions.
The invention also provides an electrode assembly suitable for incorporation into an electrochromic device the assembly comprising at least two working electrodes incorporating an electrode construction of the present invention and at least one counter electrode. It will be appreciated by those skilled in the art that a single counter electrode may be sufficient for operation in conjunction with two or more working electrodes. In one instance each working electrode has applied thereto an image or a feature of an image and each can be activated separately. It is desirable that the assembly is addressable for example by a direct addressing system. Suitably the assembly incorporates direct addressing means.

The invention also relates to an assembly comprising at least two working electrodes incorporating an electrode construction of the invention and at least two counter electrodes, the working and counter electrodes being arranged with respect to each other so that there are at least 4 discrete regions each of which may be subjected to a potential applied across a selected working electrode and a selected counter electrode, electrochromic material being provided on the assembly at each of the four regions. This arrangement provides a simple matrix assembly. Suitably there are a substantial number of working and counter electrodes so that the matrix has greater than for example 10 and more preferably greater than 100 working and counter-electrodes so that the matrix can be used for multiple image display. Multiple image display can be achieved as will be apparent to the person skilled in the art by selecting the appropriate regions of the matrix to which potential is to be applied for example using a multiplexing system. It is possible to create a display device which incorporates one or more fixed images and one or more variable images.

The present invention provides an (switchable) electrochromic device for the display of an image (the device is normally switchable between at least first and second states), the device comprising
(i) a support;
(ii) a working electrode and a counter-electrode arranged on the support;
(iii) discrete amounts of an electrochromic material applied to at least a portion of the working electrode in a spatially resolved pattern and arranged to display the image (usually in a selected state which is a working state);
(iv) an electrolyte between the working and the counter electrode
wherein the electrochromic material is (a) applied to the working electrode with a resolution of greater than about 75 dpi and (b) the electrochromic material resolution is obtained by a non-photolithographic method.

The present invention provides an (switchable) electrochromic device for the display of an image (the device is normally switchable between at least first and second states), the device comprising
(i) a support;
(ii) a working electrode incorporating an electrode construction of the invention and a counter electrode arranged on the support;
(iii) an electrolyte between the working and the counter electrode
wherein the image being formed with a resolution of greater than about 75 dpi, the resolution being obtained by a non-photolithographic method.

In all embodiments/methods of the present invention it is desirable that the size of the electrode is many times greater than the size of any individual feature of the image to be displayed.

An electrochromic device incorporating any one, or any combination of, the electrode construction of the present invention also falls within the scope of the present invention. For all constructions/assemblies forming part of the present invention it is desirable that the resolution at which the mesoporous material and/or the electrochromophore (electrochromic material) and/or the charge storing (redox) mediator and/or the masking compound is set down is greater than 75 dpi preferably greater than 150 dpi and most preferably greater than 200 dpi.

High resolutions achievable by utilising the various electrodes, assembles and devices have not been achievable before in an EC device without the use of multiple photolithographic steps to the best of the knowledge of the present inventors. The above display can be a sandwich type arrangement where the electrodes face each other so that the image is normally formed between the electrodes. Alternatively the arrangement can be an interdigitated one. The former structure often referred to as "a sandwich structure" is preferred for at least some end applications. Furthermore it will be appreciated that useful displays will have at least two states (usually a minimum of one "on" and one "off" state) and that a pixellated matrix addressable display will normally have c states following the rule that where a = no. of grey states per pixel and b = no. of pixels then log c = b * log a.

The observed resolutions can be tied to the resolution obtained by printing the electrochromic material onto a conductive large surface area material; related to the resolution of the large surface area support (usually onto a conductive substrate); or related to the printing of single pixels (large surface area material and/or electrochromic material). Resolution is also achieved by the addressing system for addressing the single pixels in a matrix addressed device.

In order to achieve good resolution it is important that the material being applied (electrochromic material and/or large surface area material and/or masking material and/or charge storing material and/or complementary electrochromic material) for a feature size (for example a feature of an image or a feature of a matrix) is applied to a substrate/support that is many times larger than the feature.

The various aspects of the present invention can be employed to provide devices having an image which has been set down with a resolution of greater than about 150 dpi. Resolution of greater than about 200 dpi is also achievable. Discrete amounts of electrochromic material at high surface concentrations for example greater than 10⁻⁸ mol/cm² assists in providing the desired resolution while maintaining good image quality.

Any given (working or counter but usually working) electrode may in addition be segmented. For example each segment may hold a high resolution electrochromic picture. Provision of individual conductive leads to each segment on the working electrode would allow for the individual switching on and off of these pictures (e.g. icons). The devices of the invention may be used to display fixed image information. In the case of fixed image display the device will normally be switchable between at least two states. One state is a working ("on") state of the device, usually defined as the state in which the electrochromic material is most deeply coloured, though embodiments in which a device is switched between two different colours is also possible. The on state is typically achieved after application of the appropriate potential. The other state is the rest ("off") state, typically defined as the state of less intense or no colouration, achieved typically after applying an appropriate potential, shorting the device or, in the case of certain embodiments, after removing the external (colouring) potential and allowing the device to return to the off state spontaneously. The usual mode of operation of the device is to display information in the working state ( in a selected colour or colours) and in the rest state the display is blank and/or the information is displayed in a different colour.

If desired the spatially resolved electrochromophore (electrochromic material) may be provided as switchable pixels. This is particularly useful as pixellation will allow for the display of different images where at least some, and desirably each, pixel is/are individually addressable. For example the device may further comprise a matrix address system. Ideally for very high pixel resolution in a pixellated display, each discrete area (dot) of electrochromic material would be a pixel each being individually addressable. However it will be appreciated that a number of dots may be incorporated into a single pixel.

Optionally a charge storing material or mediator may be provided for example on a counter electrode provided. When provided in solution (electrolyte) the charge storing mediator is often referred to as a redox mediator. When surface confined (for example on the counter electrode) the charge storing material forms a coating or layer often referred to as a charge storing band/layer. The term "redox mediator" and "charge storing band" or "charge storing layer" or "charge storing material" will be employed in various contexts. The term charge storing includes those materials considered redox mediating unless otherwise stated. The function of the charge storage material is to mediate in change transfer reactions e.g. between the counter-electrode and the electrochromic material.

It is desirable for many types of displays that at least one electrode is of transparent construction. For those electrodes formed of mesoporous structured material or formed by deposition of material with mesoporous morphology it is desirable in some instances that the mesoporous structured material is transparent. Where a substrate is employed it is desirable that is transparent also. In particular it is often the working electrode which is transparent and again it is common to employ transparent working and counter electrodes in such devices. Transparency of at least one electrode is a particular consideration in the case of "sandwich cell" constructions where the cell comprises a number of superimposed layers and in which the working electrode would obscure the image if not transparent.

For all methods and constructions of the present invention the image will normally be taken from a "master" image which is translated into or created in electronic format - thus comprising "image information". Image information can be considered to be electronic data relating to the image which can be employed to reproduce the image for example by means of an ink-jet printer. Alternatively image information can be considered to be the information needed by a matrix address system to reproduce a given image. The electronic image information can then be used to create the desired reproduction of the image such as by the printing methods above. The image information can of course be the negative as well as the positive of the image information to be applied. It will be appreciated that the image information printed could be manipulated before the printing step. For example in application of the charge storing mediator as described above the image information could be manipulated for printing so that the charge storing material is set down in the form of a mirror image of the original image. Alternatively for example the image information can be manipulated so that printing of a negative of the image takes place.

It will be appreciated by those skilled in the art that the application of any material by ink-jet printing methods means that an appropriate solution of the material to be printed by this method must be prepared. There are many criteria which apply to such solutions and these are discussed below. The applied material must dry and fix quickly (again as compared to lateral diffusion) to the surface to which it is applied. In particular the applied material must have an appropriate viscosity (mesoporous material printing) and/or must anchor quickly to the mesoporous material (electrochromohore printing). The present invention has identified certain parameters that are applicable to the solutions employed in each of the constructions/embodiments employed above.

The main factors to consider when preparing a solution for application of a desired droplet type by an ink-jetting method are viscosity of the liquid being ink-jetted and surface tension of the droplet. Accordingly one of the main components to be considered for formulations for ink-jetting are those giving desired surface tension properties. The formulations of the invention are desirably aqueous. Such compositions desirably have greater than 30% by volume of the composition water and more desirably greater than 40% by volume based on the total volume of the composition. One useful range is from about 50% to about 80% water.

Other considerations include solubility of the component being applied, density of the composition, rate of drying and to a lesser extent toxicity and stability. The composition should be resistant to the growth of fungi.

If the material for application includes for example an anchoring group such as is described in detail herein then the rate of drying is less important from the point of view of the diffusion of the material applied. It is nonetheless a desirable trait and in general the compositions of the present invention have satisfactory drying rates.

To make effective compositions with a minimum of components is desirable as it reduces the complexity of the composition as there are not a large number of components each of which may affect the characteristics of the composition (in particular the physical properties thereof) - making the task of optimising the composition more difficult. It is desirable therefore to create compositions that have a minimum number of components and such compositions are discussed below.

The composition desirably also contains a surface tension reducing component. Suitable surface tension reducing components include alcohols, polyethers etc.. Such additives have been found to be anti-fungal to an extent so that the addition of a separate component specifically to counteract the growth of fungi in the composition is not considered necessary. Such separate component(s) could of course be provided if desired.

Suitable compositions include those which are water-based, alcohol- based, glycol-based, and organic-solvent based such as benzonitrile-based.

Compositions forming part of the present invention which are readily put down by ink-jetting in particular piezoelectrically driven ink-jetting include:
I. a water-based composition comprising:
   (a) water/water-based ink;
   (b) a monoalcohol;
   (c) a polyalcohol.
II. a water-based composition comprising:
   (a) water/water-based ink;
   (b) a monoalcohol; and at least one of (c) and (d)
   (c) a polyether;
   (d) polyethylene glycol.
III. a glycol-based composition comprising:
   (a) glycol-based ink/ethylene glycol;
   (b) a monoalcohol;
   (c) water.
IV. a benzonitrile-based composition comprising:
   (a) benzonitrile-based ink/benzonitrile; and at least one of (b) and (c)
   (b) polyethylene glycol;
   (c) polyether.

For the composition I above the following component ranges are useful:

### component:

(a) 50 to 80 % calculated as volume percentage of the entire volume of the composition;
(b) 15 to 40 % calculated as volume percentage of the entire volume of the composition;
(c) 3 to 25 % calculated as volume percentage of the entire volume of the composition.

For the composition II above the following component ranges are useful:

### component:

(a) 50 to 80 % calculated as volume percentage of the entire volume of the composition;
(b) 15 to 40 % calculated as volume percentage of the entire volume of the composition;
(c) and/or (d) 3 to 30 % calculated as volume percentage of the entire volume of the composition.

For the composition III above the following component ranges are useful:

### component:

(a) 50 to 75 % calculated as volume percentage of the entire volume of the composition;
(b) 15 to 40 % calculated as volume percentage of the entire volume of the composition;
(c) 10 to 35 % calculated as volume percentage of the entire volume of the composition.

For the composition IV above the following component ranges are useful:

### component:

(a) 50 to 95 % calculated as volume percentage of the entire volume of the composition;
(b) and/or (c) 5 to 50 % calculated as volume percentage of the entire volume of the composition.

Certain parameters may be desirably employed when using an ink jet printer. For example is desirable that ink-jetting nozzle through which the solution to be applied is dispensed has a nozzle diameter of ≤ 100 µm preferably ≤ 75 µm. Desirably the volume of the drop of solution applied by the nozzle is ≤ 500 pl desirably ≤ 20 pl. In taking into account the amount of volume of the solution as compared to the surface to which it is applied it is desirable that the maximum volume/surface dispersed by the ink jet printer is 5 x 10⁻⁷ to 3 x 10⁻⁶ 1 cm⁻² preferably 8 x 10⁻⁷ to 2 x 10⁻⁶ 1 cm⁻². Where such volumes are dispersed by the printer it is desirable that the height of the solution on a plane corresponding to the maximum volume displaced is respectively 5 to 30 and 8 to 20 µm. These considerations apply to all ink-jet application processes of the present invention.

In solutions employed in the methods of the invention the concentration of electrochromic material (electrochromophore) or masking agent or charge storage material in the ink solution is preferably ≥ 0.01 mol/l more desirably ≥ 0.05 mol/l. The skilled person working with a maximum dispersible volume of 2 x 10⁻⁶ 1/cm will appreciate the concentrations of the material to employ for any given application. In general the higher the concentration of material the better the absorption onto the surface. Accordingly the droplet size may be optimised for a selected concentration or vice versa.

The surface concentration of electrochromic material (electrochromophore) or masking agent to the surface to which it is applied is desirably 5 x 10⁻⁸ to 3 x 10⁻⁷ mol cm⁻² more preferably 8 x 10⁻⁸ to 2 x 10⁻⁷ mol cm⁻². It is believed that an electrochromophore such as a viologen has, when dispensed by an ink-jet printer, a surface requirement of ca. 39 Å². It is desirable, that when applied, the electrochromophore has a surface density as measured for a plane surface of 5 x 10⁻¹¹ to 1 x 10⁻⁹ mol cm⁻² desirably 1 x 10⁻¹⁰ to 5 x 10⁻¹⁰ mol cm⁻². Assuming a roughness factor of 100 per µm TiO₂ the surface concentration of electrochromophores on a 5µm thick TiO₂ layer is desirably 2.5 x 10⁻⁸ to 5 x 10⁻⁷ mol cm⁻², preferably 5 x 10⁻⁸ to 2.5 x 10⁻⁷ mol cm⁻². Repetitive jetting can be employed where necessary.

For all methods and constructions within the scope of the present invention it is desired that the electrochromic material (electrochromophore(s)) employed has an anchoring group for fixing (anchoring) the electrochromic material (electrochromophore) to the surface to which it is applied. For example the compound could be a mono- or oligomeric viologen having as part of its structure a phosphonate group.

In the case where a mask is applied it is desirable that the mask is formed by a mono-oligo or polymeric compound. The masking compound(s) may also be applied by jetting. The masking compound(s) may be one or more lipophilic compounds. Compounds useful for the provision of a mask are alkylphosphonates. Suitably the lipophilic compound(s) are used in conjunction with one or more electrochromophore(s) with an anchoring group such as those described above.

As necessary or if desired more than one set of image information (or array dots) may be applied, such as may be achieved by separate printing over the area to which the information is to be applied. Where information is to be applied separately from separate sources a single pass over independent regions of the target area may be sufficient. Two or more passes over the same area to apply material may be appropriate in other cases such as when a greater thickness (amount) of one material is sought. It may also be appropriate to split the image information between those parts that are to be applied in different colours. e.g. from different reservoirs in a printer (a typical colour printer works with at least four reservoirs).

Where the image information is split for separate (sequential or simultaneous) application then it is desirable that each image information part be applied in accordance with the processes of the present invention.

The devices of the invention may have discrete regions which are individually addressable for example with an applied potential. The assembly can be constructed as a sandwich structure or as a lateral one. A sandwich structure is preferred. Both the mesoporous material and the electrochromophore can be provided in discrete regions in a single device. Desirably the discrete regions of the electrochromophore material are matched to discrete regions of the mesoporous material. Preferably the discrete regions of any of the devices described are provided in a matrix or array format. This latter arrangement would allow for a matrix addressable system. Such arrays normally comprise parallel rows of individually addressable segments. The segments would usually be aligned in parallel rows in a second direction for example in a direction perpendicular to the first arrangement in rows just described. Dot matrix displays with variable patterns may thus be provided. Very high resolution can be obtained for example by making each dot of a dot matrix individually addressable. The devices of the invention also allow for faster switching as compared to at least some of the prior art devices described above.

The devices demonstrate high resolution switchable images, which can be fabricated without the use of photolithographic steps. The term "device(s)" as used herein with reference to the present invention includes devices constructed by the process(es) of the invention and those incorporating electrode constructions of the present invention or assemblies of the present invention.

The mesoporous material is porous on a nanometer scale. The term "mesoporous" as used herein is used with the conventionally accepted meaning of the prefix "meso" namely to refer to dimensions between macro and micro. The following approximate values have been assigned to each term:
Macroporous: > ca. 50 nm pore size
Mesoporous: ca. 2-50 nm pore size;
Microporous: < ca. 2 nm.

The mesoporous material may be provided as a film typically of a thickness in the range from 0.1 to about 10 µm. The mesoporous material utilised may also be nanocrystalline.

The devices of the invention can show high contrast (between switchable states) and long term stability for example of an informational display. Techniques that suppress loss of electrochromophore from its applied position can be employed (as outlined above). Preferred electrochromic materials of the invention are viologens and in particular viologen groups modified with anchoring groups. Suitable viologens modified with anchoring groups are to be found in **Table 1** below.

The anchoring group could be selected from the group consisting of: phosphonate, carboxylate, sulfonate, salicylate and thiol.
The anchoring groups help to produce a stable molecular monolayer of the electrochromophore ink on the high specific surface are support.

Electrochromophores which are polymerisable and/or cross-linkable are particularly desirable as this allows for better fixation. The electrochromophore thus comprises compound(s) for deposition which undergo polymerisation or cross-linking to help fix the compounds where applied. This arrangement is particularly desirable for high resolution applications where the resolution achieved on application of the compound(s) in question may be lost due to migration for example lateral diffusion under capillary action, surface tension or such like. This is particularly desirable in conjunction with electrochromophores having an anchoring group as there is then a dual effect limiting the diffusion of the materials. Such principles may also be applied to the masking material also. The masking material may be selected from those which are polymerisable and/or crosslinkable to allow for good fixture of the masking material.

Desirably the polymerisability of the electrochromophore or masking compound is provided by a polymerisable group in the electrochromophore molecule or in the masking compound. This group will normally be an end group. It is desirably reductively or thermally polymerisable. However it will be appreciated that the polymerisation reaction may be triggered by any of the following methods: thermally, reductively, oxidatively, or photochemically. Suitable end groups which allow such polymerisation to take place, for example end groups which may be attached to the anchor modified viologens in **Table 1** are set out in **Table 6**.

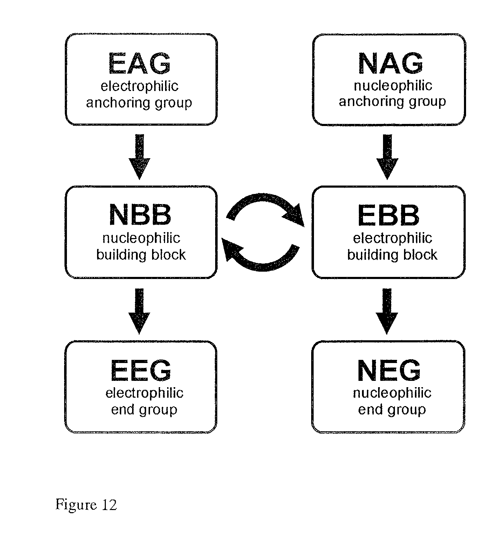

An electrochromophore or masking compound additionally or in the alternative comprising crosslinkable groups may be utilised. As stated above this allows for better fixture of the electrochromophore or masking compound once applied. The crosslinking process may be a cascade type process in particular a stepwise cascade reaction. The electrochromophore may for example be provided with a nucleophilic anchoring group (NAG) or an electrophilic anchoring group (EAG). In the case of an NAG electrochromophore once applied it may be treated alternately with electrophilic building blocks (EBB) and nucleophilic building blocks (NBB). The skilled person will know how many treatment steps are required. Washing may take place between alternate steps. The treatment is terminated by a nucleophilic end group (NEG). In the case where an EAG is employed the crosslinking may be built up by firstly treating the deposited electrochromophore with NBB and alternately with EBB (again with optional washing between steps). In this case the cross-linking reaction can be terminated with an electrophilic end group (EEG). The scheme is shown in Figure 12 and is described in more detail below.

Preferred masking materials of the invention are lipophilic compounds and in particular alkylphosphonates. Crosslinking techniques may also be used for the masking compounds. Suitable compounds are to be found in **Table 4** below.

The present invention also provides ink formulations comprising electrochromic dyes or charge storing mediators, or colloidal nanocrystalline precursors for mesoporous semiconducting or metallically conducting electrodes. Such formulations usually may be as follows:

### A composition comprising:

(i) an aqueous or organic solvent
(ii) an electrochromophore carried by the solvent at a concentration of greater than about 0.01 M.
   Where the solvent is an aqueous one the composition desirably comprises at least one of a polyhydroxyalcohol, a polyethylenglycol derivative or a monoalcohol.

Desirably the electrochromophore is present in a concentration of greater than about 0.05 M.

The colloidal material could comprise metal oxide particles having a size (diameter) in the range from 2 to 800 nm. The metal oxide may be any of the materials described herein such as in particular SnO₂ and TiO₂.

Advantageously the mesoporous material is a semiconducting metal oxide and metallically conducting electrodes, especially advantageously such materials which have been chemically modified by electrochemically active species, which may change colour according to their oxidation state. The high resolution switchable information may be achieved by the patterning of such electrode material, by patterning with a chemically modifying species, or both. The patterning of said materials is performed advantageously using non-photolithographic techniques, for example ink jet printing. The information may comprise images of one or more colours. Mono- and multicolour prints are thus achievable.

The use of chemically modified mesoporous electrodes leads to improvement in a number of properties compared to conventional electrochromic devices, e.g. switching speed and power consumption.

Printing technologies, including but not restricted to ink jet printing, can be used to prepare the electrochromic images. Formulations for inks comprising at least one electrochromic compound, or comprising at least one lipophilic compound, or comprising at least one colloidal nanocrystalline semiconductor or metallic conductor, for example a metal oxide, are useful. These inks may be used for direct (positive), indirect (negative) and direct (positive) print technologies, respectively. Particularly useful components of ceramic inks are metal oxides such as TiO₂, ZnO, ZrO₂ SnO₂, ITO (Sn: In₂O₃), NbO₂. These materials are optionally doped with one or more dopants such as Sb, Zr, Nb or Sn. Carbon in particular porous carbon could also be set down desirably by printing (as for other materials). In this respect reference is made to Edwards et al., Electrochimica Acta 46, p. 2187 (2001). The carbon can be set down with a mesoporous morphology.

While ink jet printing is known including ink jet printing using specialised piezoelectrically (or thermally) driven dispensers, modified traditional ink jet printers have been used for a variety of functional materials applications, e.g. for patterning surfaces e.g. with proteins or DNA oligomers for parallel screening in genomics or proteonics, or more general aspects of combinatorial synthesis. Ink-jet printing has also been used for the fabrication of displays based on polymeric light emitting diodes (OLED's). It has been used to produce patterned ceramics, including TiO₂, zirconia, and zirconia/alumina. However the requirements for uniformity of film thickness, for porosity and for electrical conductivity for such applications are much different than for the devices described in this invention. The term "ink jetting" is employed herein to refer to the process of deposition and is not to be construed as limiting the materials to be set down to inks. In particular the term "ink jet" and related terms are employed to describe jetting deposition methods in general, including in particular thermal and piezoelectric deposition. In other words the term is to be construed independently of the driving mechanism for the process.

The invention also provides a method for the transfer of an image having a colour depth of greater than 1-bit to an EC device comprising the steps of:
providing the image in electronic format
modifying the image to a 1-bit colour depth
converting the 1-bit colour depth image to print commands for an ink jet print head; and
printing an electrochromic material on a desired substrate in the form of the image.

The invention also relates to electrochromic compositions which are suitable for application by ink jet printing methods such as those described above.

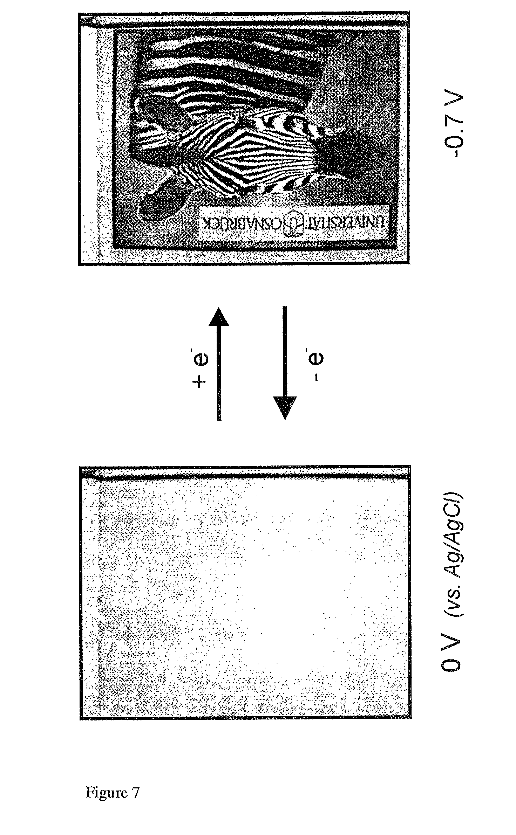

The term "image" as used in relation to the present invention includes text, numbers, alphanumeric and pictorial information (see for example Figure 7) so that the displays in question can be used to display any type of information that can be held in electronic form. As considered above the term "image information" refers to information, usually in electronic form, which may be used to reproduce the image.

The term ppi (pixels per inch) is used in this disclosure to define the resolution of an electrochromic image, of the material deposited in a device according to an embodiment of the invention, and of the resolution of an image in electronic from. The term dpi (dots per inch) will be used to define the resolution with which the printer is operated.

The term "electrochromophore" as used herein to refer to the present invention includes combinations of two or more electrochromophores for example differently coloured electrochromophores mixed to give a new colour. Similarly the terms "charge storage material", redox mediator", "masking compound" and "mesoporous material" and any other components referred to can include combinations of suitable materials. Each of the materials, when applied by a printing method such as ink-jet printing can be considered to be an ink but the term ink will generally be reserved for the electrochromic material (electrochromophore) and mesoporous forming materials.

### Brief Description of the Drawings

Figure 1 is a side sectional schematic representation of a sandwich cell configuration which may be employed by the present invention;
Figure 2 is a side sectional schematic representation of a sandwich cell configuration which is matrix addressable;
Figure 3 shows a top schematic view of part of the device of Figure 2 in particular showing the conductive substrate patterned into parallel rows;
Figure 4 shows a top schematic view of part of the device of Figure 2 in particular showing the conductive substrate patterned into parallel columns;
Figure 5 shows a side sectional schematic representation of an alternative sandwich cell configuration which is optionally matrix addressable;
Figure 6 shows a side sectional schematic representation of a further sandwich cell configuration which is optionally matrix addressable;
Figure 7 shows an electrochromic image generated by a device constructed according to Example 1 in two different states - the on and off states;
Figure 8 shows two partial enlarged views (to the respective scales indicated) from the master bitmap from which the electrochromic image of Figure 7 was generated - the image has 1-bit colour depth and 300 dpi resolution and is illustrated as it appears on a CRT screen. The inset enlarged view is for comparison purposes with the same enlarged region of a conventional ink-jet print of Figure 9, the electrochromic print of Figure 10 and a TiO₂ print of Figure 11
Figure 9 shows two partial and enlarged views (to the respective scales indicated) from the master bitmap from which the electrochromic image of Figure 7 was generated - the image was printed using a cyan ink cartridge [Epson® (S020191 cartridge)] on photo quality ink-jet paper;
Figure 10 shows two partial and enlarged views (to the respective scales indicated) from the master bitmap from which the electrochromic image of Figure 7 was generated prepared as described in Example 1;
Figure 11 shows two partial and enlarged views (to the respective scales indicated) to the image created from the master bitmap according to Example 3 (ink-jet printed TiO₂);
Figure 12 shows a scheme defined with reference to Table 5 for solid phase supported synthesis of electrochromophores yielding enhanced surface concentration and persistence of the coloration;
Figure 13 is a schemeatic representation of an ink resevoir which is adapted for use in place of a Seiko® CDP 2000 ink jet printer cartridge;
Figure 14 is a schematic representation of a caddy adapter designed to allow the conductive substrates produced in accordance with the invention to be placed into the caddy of a Seiko® CDP 2000 ink jet printer which normally would hold a CD.
Figure 15 shows the measured absorption of the two electrochromophores I and II (as discussed below in Case 1b) as a function of the mixture ratio which can be used to replicate the master image.

### Detailed Description of the Drawings

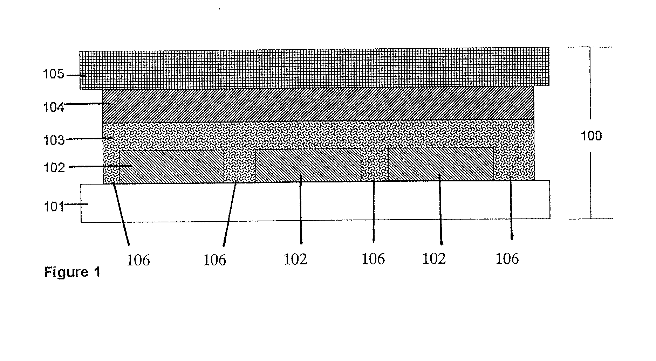

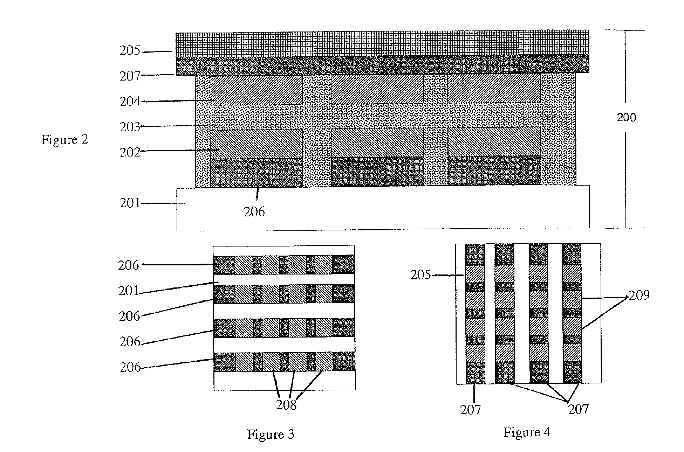

The various aspects of the present invention will be described with reference to the attached drawings. In an embodiment of the invention (Fig. 1) an electrochromic device 100 is disclosed, comprising a transparent substrate 101 coated with or formed of a metallically conductive material so as to form an electrode such as but not limited to ITO (tin-doped indium oxide) or FTO (fluorine-doped tin oxide). Figure 1 shows an entire substrate but it will be appreciated that one or more elements of an image could be applied to one or more substrate so that the elements together form the image. In the configuration shown the substrate 101 forms the working electrode for the configuration. Examples of non-conductive substrates may be glass or also any of a range of polymeric materials, including but not limited to poly(ethylene terephthelate), polycarbonate, polyethersulfone and high glass temperature hydrocarbon polymers such as cycloolefinic copolymers or norbornene based polymers. The conductive material may be unstructured or may be patterned into individually addressable segments or into an array for example of parallel rows for matrix addressing of individual elements. In this case another electrode would be arranged in parallel rows orthogonal to the rows formed by the working electrode. This latter arrangement is described in more detail below with reference to Figure 2. Onto at least a portion of the working electrode 101 one or more electrochromic materials 102 producing the image may be applied, using non-photolithographic techniques such as printing, in such a fashion as to create images with one or more colours. The images which are particularly suited to use with the devices of the present invention are detailed ones having individual elements of the image each of which is smaller in area than the area defined by the conductive material of, or on, the substrate.

In accordance with the ink jet printing method of the invention (described in greater detail with respect to the examples below) the image may be applied with a desired resolution suitably of greater than or equal to about 75 ppi (pixels per inch). In particular a resolution of greater than or equal to about 300 ppi may be achieved. If desirable a very high resolution of greater than or equal to about 600 ppi (pixels per inch) may be achieved.

The electrochromic device further comprises an electrolyte 103 to allow for movement of ions between the electrodes and charge transfer or storage material 104 which mediates in the charge transfer process necessary to effect the colour change of the electrochromic material when a suitable potential is applied to the device, and a counterelectrode 105. Figure 1 shows a configuration where the charge transfer material is confined at the counterelectrode. Alternatively it could be dispersed in solution in the form of a redox mediator. The counter electrode 105 may (as described above for the working electrode) be formed by a conductive material forming the electrode or by a conductive material deposited onto a rigid or flexible non-conductive substrate. The counter electrode 105 may optionally be structured in the same manner as the conductive material of the substrate 101 and is optionally transparent also. The structure of the device and the manner of preparation after the non-photolithographic deposition step may vary for example:
A charge storage material is present as a redox mediator in the electrolyte 103 and is bound to the counterelectrode 105, in which case it may be patterned in the same way and using similar methods to the electrochromic material 102 or it may alternatively be present in the electrolyte 103.
The electrolyte 103 may be a liquid, a gel or a solid. In the case of a solid the electrolyte may be applied to all or part of the area of the substrate 101 to which electrochromic material 102 is applied and optionally to those areas 106 of the working electrode to which no electrochromic material has been applied. The counter electrode may then be deposited *in situ* or preformed and applied subsequently.The counterelectrode 105 as stated above may or may not be modified by charge storing material 104.
In the case of a liquid electrolyte the counterelectrode 105 may be mounted with the help of an adhesive sealant and spacers onto the substrate 101 after deposition of the electrochromic material, and the device may be sealed by techniques known in the art such as vacuum back filling and forward filling.
In the case of a gel the electrolyte may be deposited onto the substrate prior to attachment of the counterelectrode, or the gel may be heated to above the melting point and the device assembled in the same manner as described for a liquid electrolyte.

The device so described is functional as a display device and is suitable for attachment to a source of current and voltage. When the appropriate voltage is applied to the desired area(s) of the device, the images deposited onto the conductive substrate may be turned on and off as desired. In particular it will be noted that the image whatever its resolution may be switched on or off as desired.

In another embodiment of the invention (Figures 2-4) a display device 200 is disclosed having the general construction of the device of Figure 1 as described above. However in this embodiment the substrate 201 has applied thereto conductive material which is patterned on the substrate 201 into parallel rows 206 to form the working electrode. The counter electrode is similarly formed by the application of conductive material which is patterned into corresponding parallel columns 207 on a substrate 205. In all embodiments of the present invention it is desired that the conductive material forming the working electrode, or provided on a substrate to form the working electrode, comprise a mesoporous material. In particular it is desired that the material employed is a mesoporous material. In the device the working and counter electrodes are arranged so that the rows 206 and the columns 207 are substantially perpendicular to each other. This arrangement is particularly suited to matrix addressing of individual elements at the intersection of the rows and columns such as will be apparent to those skilled in the art.

Onto the rows 206 of conductive material of the working electrode one or more electrochromic materials 202 are deposited, using non-photolithographic techniques such as printing, in such a fashion so as to match with the intersections of the rows 206 and columns 207 (in the embodiment of Figure 2 as square areas 208 ).

The detail of the image to be displayed will of course depend on the resolution which can be achieved. In the matrix addressable system of Figures 2-4 the limit of resolution will depend on the size of addressible rows and columns and the resolution with which the electrochromic material can be deposited. The detail of the image to be displayed must thus be matched to the device specification. The person skilled in the art will know the resolution required for good definition of images. The display devices and images application methods of the present invention may be employed for the display or application of images which have image detail which may range from sizes easily visible to the unaided human eye to small sizes, favourably with a resolution of greater than about 75 ppi (pixels per inch), very favourably greater than or equal to about 300 ppi and more desirably a resolution of greater than or equal to about 600 ppi (pixels per inch).

As in the embodiment of Figure 1, the charge storage material(s) 204 may be bound to the counterelectrode 205 and structured in the same fashion (as shown in Figure 4 as square areas 209 which match the square areas 208 of electrochromophore) as and using similar methods to the electrochromic material(s) 202. The device may be assembled by any known method for example in accordance with the methods described above.

As will be appreciated by the person skilled in the art an image may be turned on or off or varied with time by choosing in a time dependent manner the intersections of the rows 206 and the columns 207, which are to be addressed by the voltage and current source which in accordance with conventional addressing systems is split between the rows and the columns. The intersections thus act as pixels i.e individual elements of a picture which can be turned on or off as required. The array of intersections may thus be considerd to form a dot-matrix display.

Addressing methods are well known to those skilled in the art and the skilled person will know which method of addressing to employ for any particular display. Methods for addressing displays such as dot matrix displays may include what are often referred to as "passive" matrix addressing, in which, the voltage is applied directly to the electrochromic material forming the individually addressable elements, and active matrix addressing in which active elements e.g. thin film transistors, are addressed and which in turn control switching of the electrochromic material. Possible schemes for passive and active matrix addressing, which, among others, may be applied to the matrix addressable embodiments of the invention are disclosed in US Patent No. 4,146,876 and in US Patent No. 5,049,868.

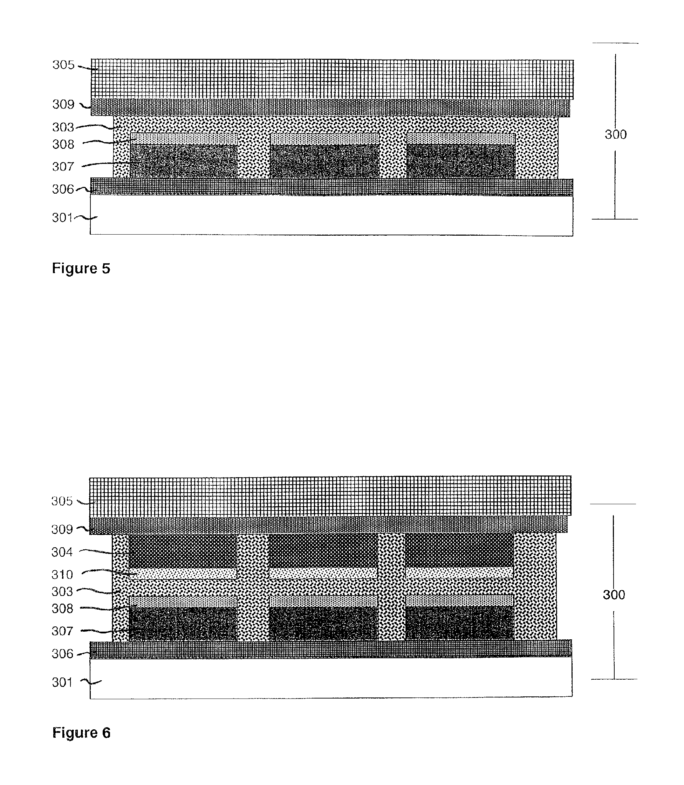

In a preferred embodiment of the invention shown in Figure 5 an electrochromic display device 300 is disclosed having the same general components as the devices described above. The device could be constructed as in Figure 1 or could in the alternative be constructed as shown in Figures 2-4 i.e. the device can be constructed to be matrix addressable or not.

As discussed above the device comprises a transparent non conductive substrate 301 onto which a layer of conductive material 306 is deposited. In the embodiment onto the conductive material 306 discrete areas of a mesoporous structured material in particular a metal oxide material 307 and an electrochromic dye 308 as disclosed in Campus, F., Bonhôte, P., Grätzel, M., Heinen, S., Walder, L., *"Electrochromic devices based on surface-modified nanocrystalline TiO*_{*2*} *thin-film electrodes"* Solar Energy Materials & Solar Cells, 1999.56(3-4): p. 281-297 or EP 0 886 804. This arrangement is configured as the working electrode of the device. Also provided is a non-conducting substrate 305 (which is not necessarily transparent) to which a conducting layer 309 is applied. The embodiment is not shown in Figure 5 in a configuration compatible with matrix addressing but can in a straightforward manner be modified to be so, in a manner analogous to Figure 2. A redox mediator is provided in the embodiment of Figure 5 dissolved in an electrolyte 303. The electrolyte 303 is provided to complete the electrochemical cell.

A very similar configuration is shown in Figure 6 and the same reference numerals are employed for those parts of the device which are the same as in Figure 5. The Figure 6 embodiment shows additional features. In the embodiment a layer 304 is constructed of a mesoporous material and attached to the layer 304 is a chemically attached charge storage material 310, which may be a redox active material. Alternatively the charge storage material 310 may be identical with the mesoporous material. Therefore in this embodiment a redox mediator in the electrolyte 303 is not required.

In the constructions described above there are many possibilities for the materials employed for each layer and for the methods of forming each layer. Some are now mentioned:
The charge storage material 304 may be one or more of the following:
   One or more species dissolved in solution (the Figure 5 embodiment) that can act as a redox couple and complete the electrochemical reaction by diffusion to the counterelectrode as for example is disclosed in Campus, F., Bonhôte, P., Grätzel, M., Heinen, S.,
   Walder, L., *Electrochromic devices based on surface-modified nanocrystalline TiO*_{*2*} *thin-film electrodes.* Solar Energy Materials &
   Solar Cells, 1999.56(3-4): p. 281-297, and EP 0 958 526.
   A redox couple between the counterelectrode and a species in solution as disclosed in EP 0 886 804 the figure 5 embodiment. A chemically modified mesoporous nanostructured film as disclosed D. Cummins et al., J. Phys, Chem. B 104, 11449-11459 (2000) comprising a mesoporous nanostructured material 304 or a capactive carbon layer as disclosed in Edwards et al., Electrochimica Acta 46, p. 2187 (2001) and a chemically attached redox mediator 310 (the Figure 6 embodiment).

In a preferred embodiment the electrochromic material 302 and/or 308 (and where the redox mediator is not otherwise provided in the electrolyte optionally the redox mediator 310 (as identified below)) is/are deposited in a spatially resolved manner in one of the four following ways:
Case 1:
   This is referred to as the positive image technique as the image is printed by application of the electrochromophore(s) directly to form the image.
   The method involves the printing of solution(s) of the electrochromophore(s) (for example the layer 308) onto the mesoporous structured layer (for example onto a mesoporous nanostructured metal oxide film 307). The mesoporous structured layer may be deposited at a lower resolution using methods disclosed in the literature such as doctor blading or screen printing. In this way the image is obtained directly and various colours can be employed by selecting the appropriate electrochromophore material. It will be appreciated by those skilled in the art that two or more electrochromophores together in the correct ratios may provide a desired colour. This method can thus be considered to be a direct one, two or mult-colour print process.
Case 2:
   The negative image image may be applied by printing an appropriately patterned mask of masking material to selectively mask selected areas of the mesoporous structured layer and later appling electrochromophoric material to the unmasked areas. For example in this method where the mesoporous structured layer is formed of TiO₂, a solution of a non-electrochromic TiO₂-coordinating, lipohilic compound(s) that coordinate(s) to the mesoporous nanostructured metal oxide film. In other words a negative mask is generated. A conventional development step in which one or more electrochromic dyes are deposited. The dyes deposited may form the layer 308. This method may be thus considered an indirect one-colour print method.
Case 3:
   In this case the mesoporous structured layer is used to create the image.
   By setting down the mesoporous structured layer in the form of the desired image and subsequently attaching the electrochromophoric dye the desired image is achieved. The mesoporous structured layer is thus used to form a positive image. One method of depositing the mesoporous structured layer is for example by printing a positive image using a colloidal solution suitable to form a mesoporous nanostructured metal oxide film 307 followed by a development step in which one or more electrochromic dyes 308 is deposited onto the image defined by the mesoporous structured material. Deposition can be done in conventional fashion for example by immersion as the selective deposition of the mesoporous structured is sufficient to create the desired pattern of electrochromic material. This system can be used to create direct one-colour prints. If desired however the electrochromophore can be optionally printed in the same manner as can for example the redox mediator.
Case 4:
   In this method both the mesoporous structured material is set down in a spatially resolved manner and the electrochromic material is set down on the mesoporous structured material in a spatially resolved way. This may be achieved for example by printing the colloidal solution of the mesoporous nanostructured metal oxide film 307 (optionally also a mesoporous structured layer 304), as in Case 3, followed by spatially resolved deposition of the electrochromic dye(s) 308 (optionally also the redox mediator layer 310)

As in the embodiments above, individual elements or images may be turned on or off or modified by addressing the appropriate elements of the device.

Another embodiment of the invention is a process for manufacturing an electrochromic device containing high resolution switchable graphic or alphanumeric information without the use of photolithographic techniques other than the patterning of the conductive substrates.
A central part of this embodiment is a new technique for the fabrication of electrochemically switchable high resolution mono- or multi-coloured images with graphical or alphanumeric information. A common principle of the invention is the method of application of the electrochromophore(s) which can be thought of as an ink Case 1: ink = electrochromophore and optionally redox mediator
Case 2: ink = negative mask for the electrochromophore or redox mediator or
Case 3: ink = colloidal nanocrystalline metal oxide for mesoporous nanostructured film Case 4: inks = Case 1 and Case 3 (Case 4 is a dual step printing process)
using printing techniques, for example ink jet printing.

### Case 1a (positive one-colour printing using an electrochromic ink):

For Cases 1 and 2 a metal oxide modified conductive glass is prepared by known methods such as doctor blading or screen printing using a colloidal dispersion of a metal oxide, for example nanocrystalline titanium dioxide, that yields after firing a sintered thin film of a mesoporous metal oxide with a thicknesses in the range of 0.5 to 10 µm, preferably 2-6 µm for example as disclosed in EP 0 886804 A.

In Case 1 (see Example 1) the principal ingredient of the ink is an electrochromic compound, for example a viologen derivative, or a redox mediator, for example a phenothiazine, equipped with an anchoring group for attachment to the mesoporous metal oxide film.

Anchoring groups for attachment to in particular the mesoporous nanostructured material is important. Typical electrochromophores to which an anchoring group is attached and which are useful in the methods of the present invention and which may be incorporated into electrochromic ink formulations include the following set out in Table 1:

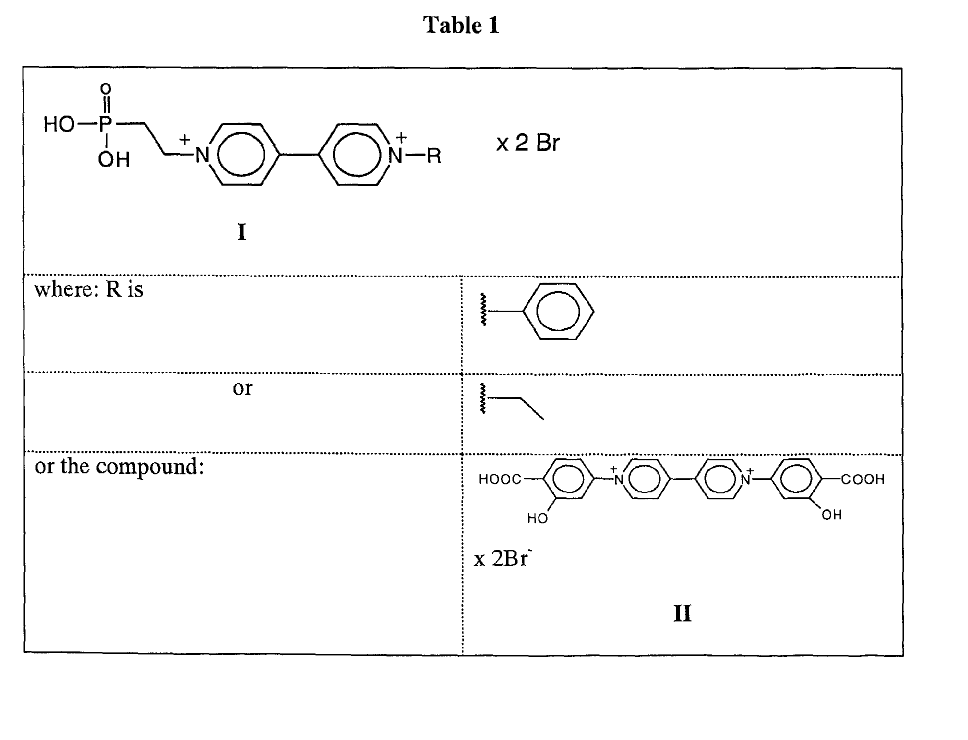

During the ink jet process the ink is applied to the thin film electrode. As well known for ink jet printing, macroscopically, the amount of ink applied is a function of the intensity of the corresponding colour in the original. Microscopically, the software controls the area density of applied drops, the volume per drop being constant. There exists a crucial relationship between the volume of ink applied per area, the concentration of the electrochromophore in the ink, the roughness factor and the thickness of the metal oxide film, the lateral extension of the electrochromic pixel, as well as the area occupied by one molecule of electrochromophore. The following criteria should be complied with for best results in image quality: (i) the amount of electrochromic material should fit the number of coordination sites in the ceramic material underneath the applied drop, (ii) that the concentration of the electrochromophore cannot exceed its solubility, (iii) that the adsorption process should be fast as compared to the lateral difuusion of the droplet in the mesoporous structured material, and (iv) that drop formation at the ink jet nozzle is required.
Suitable parameters are set out in **Table 2** below for an ink-jet printer.

**Table 2**

| **Parameter** | **Parameter Value** | **Preferred Parameter Value** | **Unit** |
|---|---|---|---|
| Nozzle diameter^{*a)*} | ≤ 100 | ≤ 75 | µm |
| Drop Volume^{*b)*} | ≤ 500 | ≤ 20 | pl |
| Maximum volume/surface dispersed by ink jet printer | 5 x 10⁻⁷ to 3 x 10⁻⁶ | 8 x 10⁻⁷ to 2 x 10⁻⁶ | 1 cm⁻² |
| Height of solvent on a plane surface corresponding to max. volume dispersed | 5 to 30 | 8 to 20 | µm |
| Concentration of electrochromophore or masking agent in ink | ≥ 0.01 | ≥ 0.05 | mol/l |
| Amount of electrochromophore or masking agent to the surface to which it is applied | 5 x 10⁻⁸ to 3 x 10⁻⁷ | 8 x 10⁻⁸ to 2 x 10⁻⁷ | mol cm⁻² |
| Surface requirement of viologen type electrochromophore^{*b)*} | ca. 39 | | Å² |
| Surface Density of electrochromophore on a plane surface ^{*c)*} | 5 x 10⁻¹¹ to 1 x 10⁻⁹ | 1 x 10⁻¹⁰ to 5 x 10⁻¹⁰ | mol cm⁻² |
| Surface concentration of electrochromophores on a 5µm thick TiO₂ layer | 2.5 x 10⁻⁸ to 5 x 10⁻⁷ | 5 x 10⁻⁸ to 2.5 x 10⁻⁷ | mol cm⁻² |

| | | | |
|---|---|---|---|
| *a)* according to literature reference: Windle, J. and B. *Derby*, *Ink jet printing of PZT aqueous ceramic suspensions.* Journal of Materials Science Letters, 1999. 18(2): p. 87-90. | | | |
| b) according to literature reference: Yan, J. C., Li, J. H., Chen, W. Q., Dong, S. J., Synthesis of N-(N-Octyl)-N'-(10-Mercaptodecyl)-4,4'-Bipyridinium Dibromide and Electrochemical Behaviour of Its Monolayers On a Gold Electrode. Journal of the Chemical Society-Faraday Transactions, 1996.92(6): p.1001-1006. | | | |
| *c)* Using a roughness factor of 100 per µm TiO₂ | | | |

**Table 3** below illustrates a possible set of parameters that fulfil the above requirements for a Seiko® CDP 2000 ink jet printer.

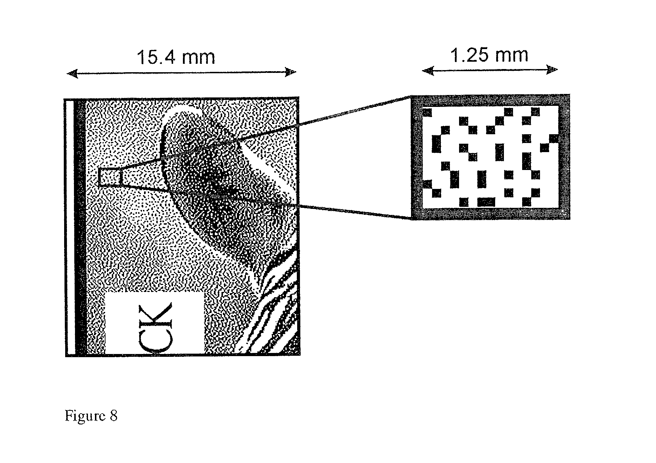

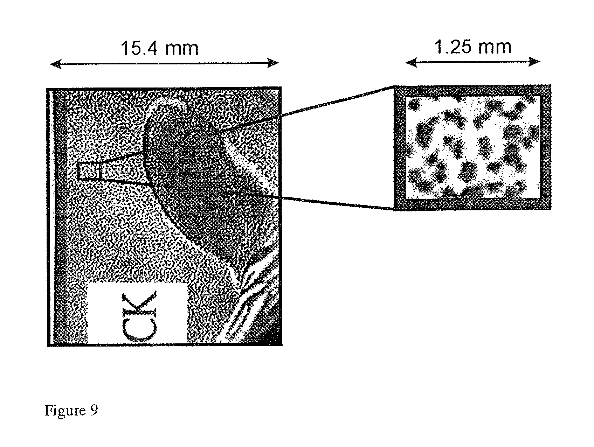

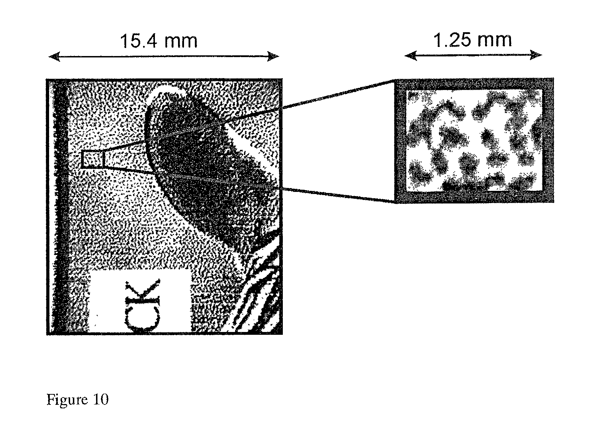

A switchable one colour electrochromic picture which was prepared according to Example 1 and checked under three electrode conditions is shown in Figure 7 in both the on and off states. The excellent transfer of resolution and gradation is demonstrated by comparing Figure 8 (original bitmap (of the top left hand corner of the image of Figure 7) on a CRT screen with a resolution of 300 ppi), Figure 9 (a 720 dpi ink jet print on high quality ink jet paper), and Figure 10 (a microphotograph of the corresponding electrochromic picture). A resolution of 300 ppi is achieved in the electrochromic print similar to that achievable by normal printing on paper. Grey scales in the image are achieved, in the same fashion as commonly used in printing, i.e. by controlling the number of pixels which are coloured rather than controlling the colouring level of each pixel, as is common with LCDs, which do not provide sufficient spatial resolution to control grey scales as is done in printing. Electrochromic images as described in this invention can in principle be controlled by both methods, thereby offering a high degree of control over grey scales.

**Table 3:**

| Typical volumes, liquid heights, and amount of electrochromic or masking agent dispersed by the Seiko® CDP 2000 | | |
|---|---|---|
| Maximum volume/surface dispersed by ink jet printer ^{a)} | 1.3 x 10⁻⁶ | I cm⁻² |
| Height of solvent corresponding to max. volume dispersed ^{b)} | 13 | µm |
| Concentration of electrochromophore or masking agent in ink ^{c)} | ca. 0.1 | M |
| Amount of electrochromophore (or masking agent) / surface applied | ca. 1.3 x 10⁻⁷ | mol cm⁻² |
| Surface requirement of viologen type electrochromophore ^{d)} | ca. 39 | Å² |
| Surface density of electrochromophore on a plane surface | ca. 5 x 10⁻¹⁰ | mol cm⁻² |
| Surface conc. of electrochromophores on a 5 µm thick TiO₂ layer ^{e)} | ca. 2.5 x 10⁻⁷ | mol cm⁻² |

| | | |
|---|---|---|
| a) Value measured for Seiko® CDP 2000 for a 100 % pure colour (C, Y or M). | | |
| b) If compared with the 5 µm height of the TiO₂ layer with 60 % porosity a ca. 9 µm liquid layer is sitting above the TiO₂ layer just after drop arrival - penetration. | | |
| c) This value is related to the maximum solubility of the electrochromophore or masking agent in the solvent. | | |
| d) According to Yan, J. C., Li, J. H., Chen, W. Q., Dong, S. J., Synthesis of N-(N-Octyl)ERR-N'-(10-Mercaptodecyl)-4,4'-Bipyridinium Dibromide and Electrochemical Behaviour of Its Monolayers On a Gold Electrode. Journal of the Chemical Society-Faraday Transactions, 1996. **92**(6): p. 1001-1006. | | |
| e) Using a roughness factor of 100 per µm TiO₂. | | |

### Case 1b (positive multi-colour printing using several electrochromic inks):

Multi-colour prints can be prepared in analagous fashion as described above for Case 1a in a single ink jet process. The corresponding electrochromic inks (see the inks identified as being useful above) are fed into the printhead pipes as described for a single ink in Example 1. Procedures and software adjustments of the bitmap (see General Procedures) to transfer a two colour gradient linearly from the CRT screen onto the electrochromic working electrode (see Figure 8) are herein disclosed. Using the methods described herein the linear transfer of a colour gradient from the CRT to an electrochromic image is possible.

### Case 2 (negative one-colour printing using a lipohilic ink followed by development):

In Case 2 (see Example 2) the principal ingredient of the ink is a lipophilic compound equipped with an anchoring group, for example an alkyl phosphonic acid.

Representative compounds (suitable for use as masking agents) are set out in Table 4:

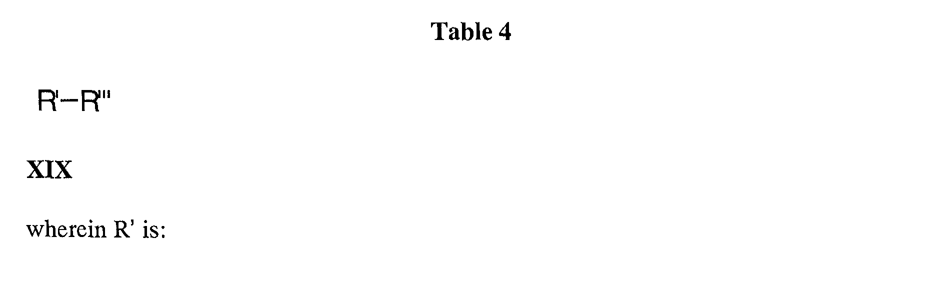

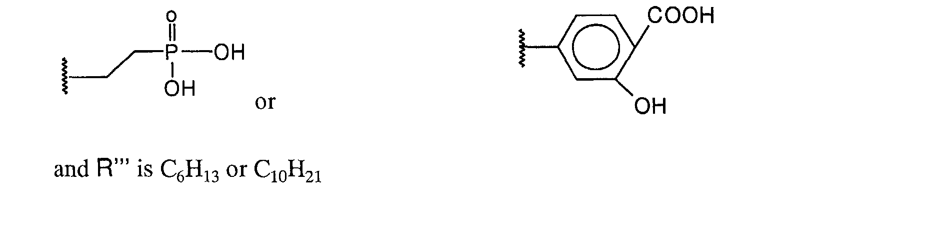

During the ink jet process of the negative image, the ink is applied to the thin film electrode. Similar criteria as for Case 1 have to be fulfilled, i.e. (i) the amount of lipophilic material should fit the number of coordination sites in the ceramic material underneath the applied drop, (ii) the concentration of the lipophilic compound cannot exceed its solubility, (iii) the adsorption process should be fast (again as compared to lateral diffusion) and (iv) that drop formation at the ink jet nozzle should be guaranteed. **Table 2** illustrates a possible set of parameters that also fulfils the above requirements for lipophilic compounds. Case 2 type images will most usually be latent and must be developed in a ca. 10⁻² - 10⁻⁴ M aqueous/alcoholic solution of an electrochromophore such as the electrochromophores listed above for Case 1. The electrochromophore coats under these conditions only areas that have not been treated with the lipophilic alkyl phosphonic acid. A similar resolution as described for Case 1 is observed.

### Case 3 (positive one-colour printing using a colloidal ink followed by development):

In Case 3 (see Example 3) a conductive substrate without a precoated mesoporous metal oxide film was employed in contrast to the experimental work for Case 1 and 2. The ink consists of a colloidal dispersion of nanocrystalline metal oxide, for example titanium dioxide or tin oxide. For this purpose the concentration of the colloidal dispersion was adjusted in order to make the ink printable (see Example 3 for details). Taking the dilution of the colloid (ca. 10 %) and the volume delivered by the ink jet at 100 % density into account, the height of the film after one pass is below 1 µm. In order to achieve sufficient contrast in the final device several consecutive passes may be necessary. After the final sintering process the electrodes are exposed to a solution of the electrochromophore or redox mediator. During this process the material is adsorbed according to the pattern of the structured mesoporous nanostructured film, that reflects the positive original information.

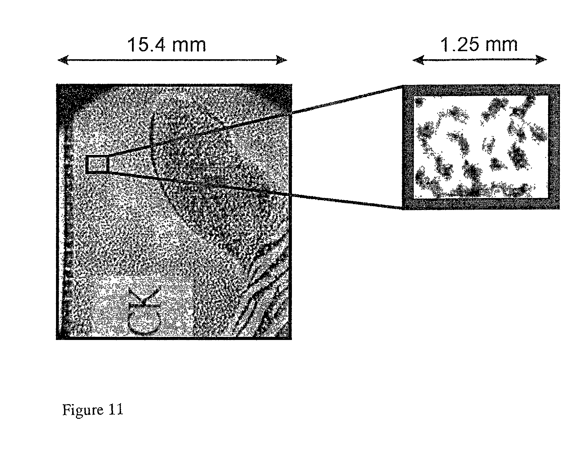

As shown in Figure 11, the resolution obtained for a colloidally patterned electrode is similar to that obtained in Case 1 or 2, i.e. printing on an electrode with a homogeneous mesoporous nanostructured layer.

### Case 4 (positive multi-colour printing using a colloidal followed by a second inkjet treatment using different electrochromic inks):

This case is principally a combination of Cases 3 and 1b, i.e. the grey-scale structure of the image is determined by the structured mesoporous nanostructured metal oxide film resulting from a printing procedure as described in Case 3. The electrode is then "coloured" in a second jet procedure according to the procedure of Case 1b. If necessary correction for the variations in intensity may be governed by the deposition pattern for the mesoporous nanostructured film.

### Improved long term stability and molecular enhancement of contrast:

Equilibrium of molecules attached to the metal oxide support and in the electrolyte could in principle lead to lateral migration of electrochromic dyes and redox mediators for example as in Case 1 and Case 2 and Case 4 electrochromic prints. Such lateral migration could lead to loss over time of pictoral information (fading of the picture). In practise, such migration, for example between electrochromic dye and redox mediator on opposite electrodes, has not been observed in devices such as those disclosed in EP 0886 804. Nonetheless methods for further stabilisation are desirable.
One such method to improve the stability of the electrochromic picture is to cross-link the materials after deposition. Two types of reaction procedures have been found to lead to cross-linking of attached neighboring electrochromophores, i.e. (i) stepwise cascade reactions (Figure 12 and **Table 5** below) and (ii) polymerization reaction (**Table 6** below). Table 5 sets out some molecular units which may be used to enhance the surface concentration of the electrochromophore and the persistance of the colour. It will be appreciated by those skilled in the art that for example the compound of Formula III can be considered a precursor to an electrochromic material in particular an precursor to a electrochromophore.

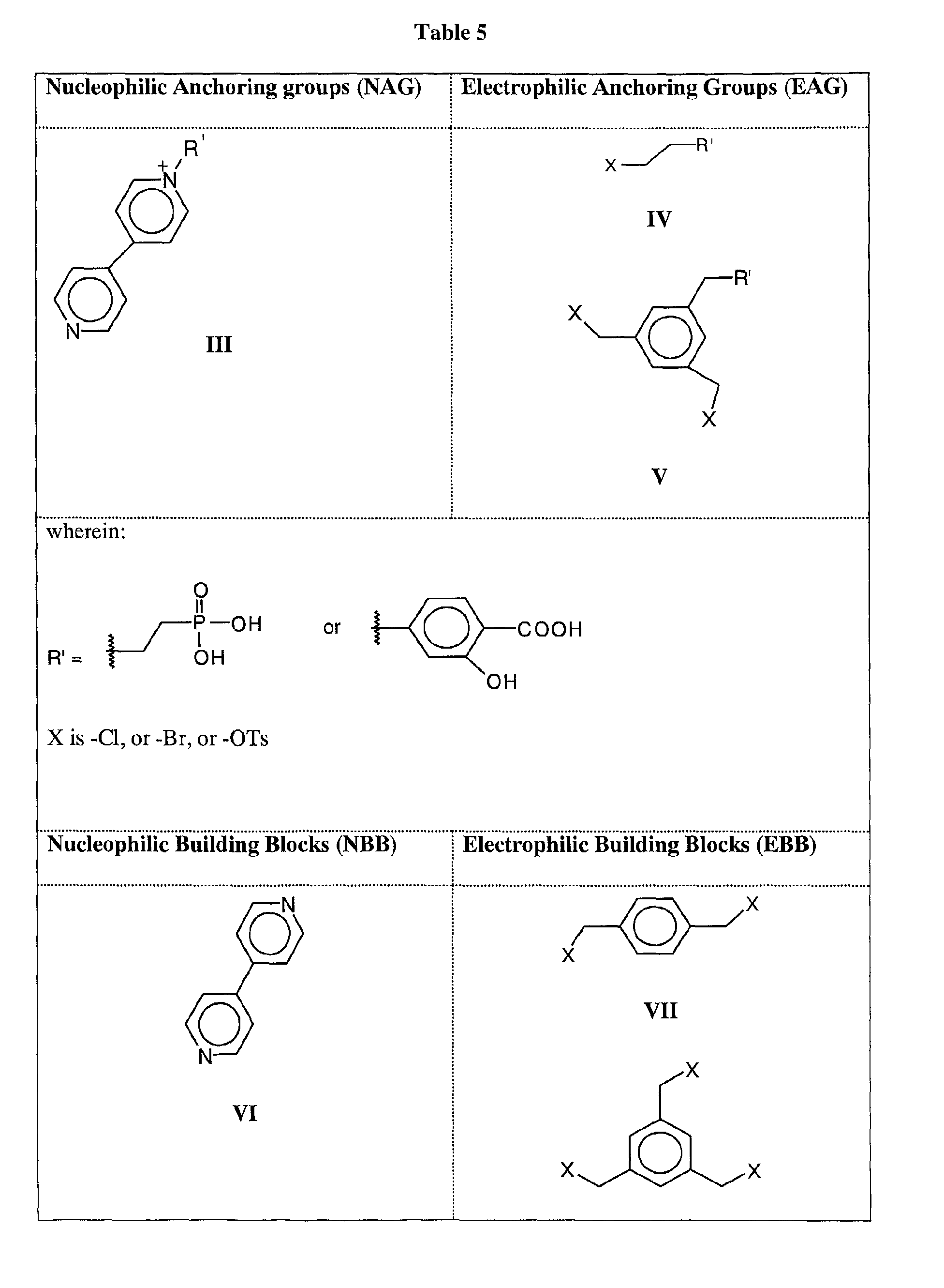

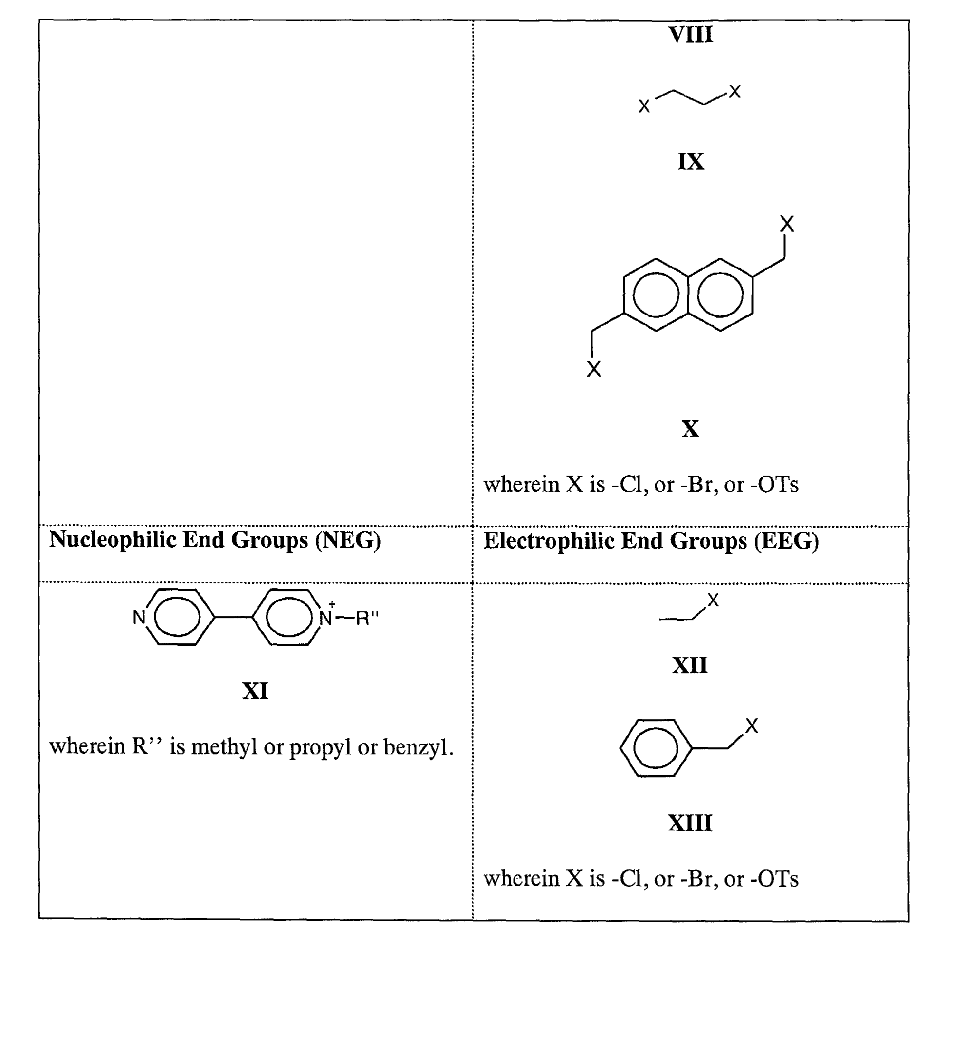

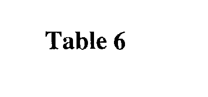

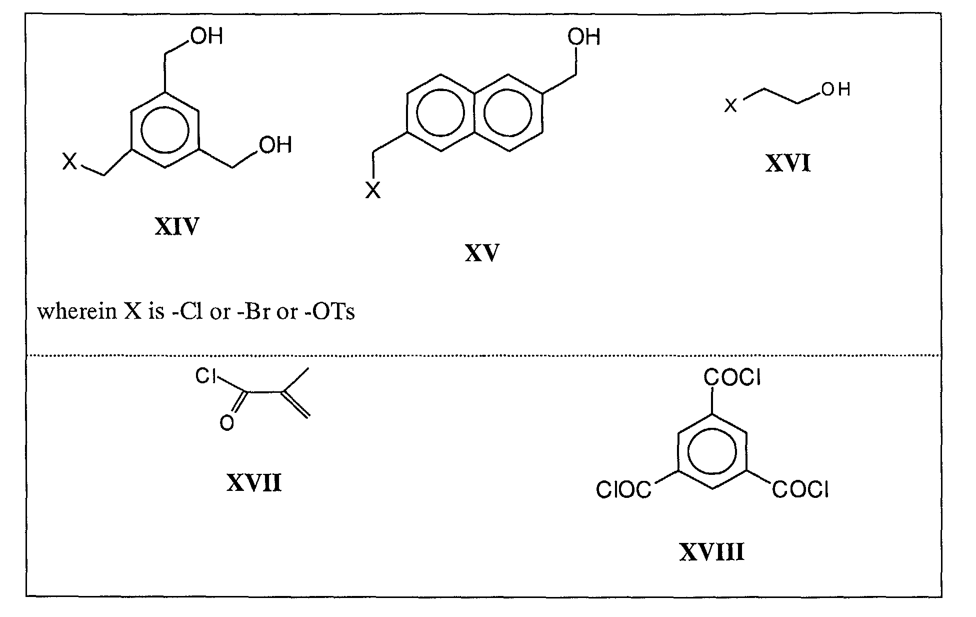

(i) Stepwise Cascade Reactions:
   Using a printable ink containing an anchor group and an electrophilic (EAG) or a nucleophilic (NAG) reactive site as shown in **Table 5,** the pictorial information is transferred to a the TiO₂-coated electrode. In case of a NAG printed electrode it is treated with a solution containing building blocks with multiple electrophilic (EBB) groups, followed by a washing cycle. Then the electrode is treated with a solution containing building blocks with multiple nucleophilic (NBB) groups, followed by a washing cycle. It follows again a treatment again with the solution containing building blocks with multiple electrophilic (EBB) groups, followed by a washing cycle and so on, according to Figure 12. In case of a EAG printed electrode the procedure is reciprocal, i.e. it is first treated with a solution containing building blocks with multiple nucleophilic (NBB) groups, and so on. Finally the reaction is terminated by treatment of the electrode with a solution of a nucleophilic (NEG) or electrophilic endgroup (EEG). This procedure yields cross-linked electrochromophores with dendritic structure, higher surface affinity and larger surface concentration as compared to the treatments according to Case 1 and 2. The degree of cross-linking and dendritic growth is determined by the compounds used, the concentration used and other experimental factors. The technique is applicable to Case 1, Case 2 and Case 3 electrochromic electrodes. A slight variation in the process management allows also cross-limking and intensification of colours in case of multi-colour prints. Contrast enhancement and stabilization of the pictorial information by the cascade reaction described here is an important part of the invention. We found both, enhanced colouration and enhanced stability for electrodes treated according to the cascade reaction (see Example 5).
(ii) Polymerization Reaction:
   Using a printable ink containing an electrochromic compound with a TiO₂ anchor and a reductively or thermally polymerzable end group as shown in **Table 6**, it is possible to stabilize the monomolecular electrochromic layer after printing by triggering the polymerization thermally, reductively, oxidatively or photochemically. The use of polymerizable end functions on the electrochromophores is an important part of the invention.
Method (i) and method (ii) may also be combined.

### Electrolyte, Solvent, Counterelectrode, Redox mediator, and Cell Assembly:

Established solvent electrolyte systems, counterelectrodes, redox mediator and cell assembly techniques as descibed in:
Campus, F., Bonhôte, P., Grätzel, M., Heinen, S., Walder, L., *Electrochromic devices based on surface-modified nanocrystalline TiO*_{*2*} *thin-film electrodes.*
Solar Energy Materials & Solar Cells, 1999.56(3-4): p. 281-297.
EP 0 886 804 , EP 0 958 526, D. Cummins et al., J. Phys. Chem. B 104 11449-11459 (2000) (in press) and EP 0 531 298.
can be used (in the Figure 5 or 6 configuration). For a specific closed cell assembly see Example 6.

### Graphical Resolution of the electrochromic print:

A typical example of a switchable one colour print is shown in Figure 7. The transfer quality of a 300 ppi (pixels per inch) bitmap with 1 bit colour depth using a 720 dpi (dots per inch) printer is demonstrated by comparing Figure 8 (original 300 ppi bitmap on the CRT screen) and Figure 9, a microphotography of the corresponding picture (720 dpi ink jet print on high quality ink jet paper using the original colour cartridge). The same 300 ppi bitmap printed with electrochromic ink on TiO₂ (Figure 10) under otherwise identical conditions reveals the same quality as the print on paper. This means that electrochromic prints of at least 300 dpi resolution can be prepared according to this procedure.

Therefore, neither the electrochromic ink nor the TiO₂ substrate limit the resolution up to 300 dpi and resolution above 300 dpi, preferably above 600 dpi are expected to be feasable.

The disclosed invention is described more fully in the following examples

### General Procedures

### Printer modifications:

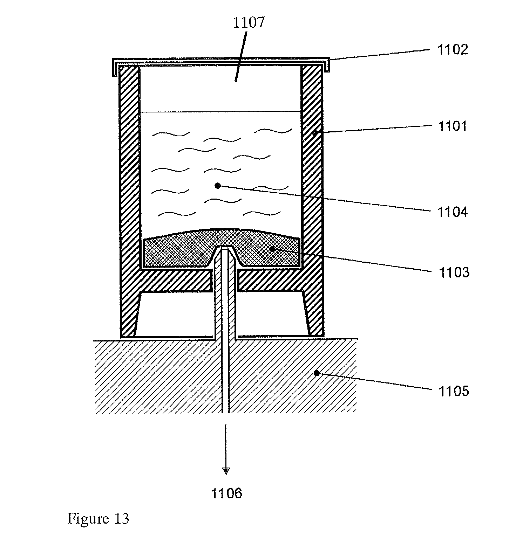

The ink jet printer used to apply the electrochromic ink can be on purpose designed or it can be a conventional ink jet printer for flat rigid substrates.
A Seiko® CDP 2000 for printing on CD's was used, except for the following modifications:
The electrochromic ink reservoirs were prepared according to Figure 13 from perforated silicon stoppers forming a silicone vessel 1101 and equipped with a paper filter 1103 and slipped onto the original Seiko® connection sleeves. Up to four such vessels fit into the particular printer employed. A cover of PTFE is employed to cover the mouth 1107 of the vessel 1101. The electrochromic or ceramic ink 1104 employed is held within the vessel. The filter 1103 filters the ink passing through the bottom of the vessel 1101 to ink pipe 1106 which communicates the ink to the nozzle(s) of the printer. The socket 1105 is the socket on the printer for receiving an ink cartridge.

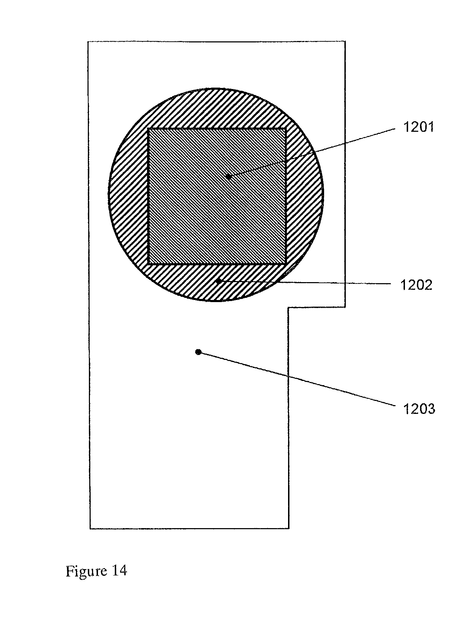

As seen from Figure 14 an adapter 1202 for a 70 mm x 70 mm conductive glass plate 1201 was cut from hard paper to fit into the original Seiko® CD-caddy 1203. The cartridge holder was lifted by adjustment of the eccentric sliding bar holder to use Examples of 2.2 mm thickness. The original absorptive felt in the bottom of the Seiko® printer was removed and a hole was cut in the bottom of the felt container. A small vessel was placed under the suction pump outlet.

### Image editing:

The original graphical or alphanumeric information was image edited on a computer Corel Photo-Paint® (V.9) and CorelDraw® (V. 9). All master bitmaps were adjusted to 300 ppi (pixel per inch, example 1-3) and the preparation of the bitmap is principally identical for all direct positive processes (Examples 1, 3, and 4). The preparation of the bitmap for masked printing is set out in Example 2.

The software treatment of the bitmap used is related to the driver of the Seiko® printer. It is possible to ink jet a gray-shaded one-colour picture directly without pretreatment of the bitmap relatively easily. However, the amount of ink jetted per area is smaller and contrast will be lower as compared to the case described in Example 1.

### Examples

### Example 1: working electrode with a direct positive one colour electrochrome print (Case 1a)

### Preparation of the conductive glass:

A TEC glass (70 x 70 x 2.2 mm) was immersed in aqueous NaOH/isopropanol solution for several hours, washed with distilled water and dried.

### TiO₂-coating of the conductive glass:

The clean TEC glass was coated with a colloidal solution of TiO₂ using the doctor blade method, as described in the literature. R. Cinnsleach et al., Sol. Energy Mater. Sol Cell 1998, 55.215.

### Preparation of electrochromic ink:

A solution of 0.1 M N-(Phosphono-2-ethyl)-N'-ethyl-4,4'-bipyridinium dibromide in 68 vol% water, 25 vol% methanol and 7 vol% glycerine was prepared.

### Image editing:

A gray scale Windows® bitmap with 300 ppi resolution was converted with Corel Photo Paint (V. 9) to 1 bit colour depth using the Jarvis algorithm. The graphic was then transformed into the negative and imported to CorelDraw® (V. 9). The white pixels were then converted to transparent and the black pixels were turned to white. Finally, a rectangle of pure cyan was placed behind the bitmap. As a result, a positive 1 bit cyan/white image was obtained (Figure 7).

### Standard printing onto paper:

The quality of the printer in producing the corresponding hard copy is shown in Figure 8 (using the original Epson® S020191 cartridge with the Epson® Stylus Color 440 driver for Windows NT® 4.0 Version 3 (driver settings: normal paper, 720 dpi, colour mode, other parameters default) and photo quality paper). As illustrated in Figure 8 the individual dots of the 300 dpi map are at the limit of resolution (20 % overlap of neighbouring dots).

### Electrochromic printing (Figure 1):

The TiO₂-covered conductive glass was put into the caddy using the adapter. The pure solvent (68 vol% water, 25 vol% methanol and 7 vol% glycerine) was filled into the vessel sitting on the cyan connection sleeve. Two sequential purge cycles were manually triggered and followed by a test print. Afterwards the glass plate was washed with acetone and put again into the caddy. This procedure was repeated until the solvent flow from the unit was regulated. The pure solvent was then exchanged with electrochromic ink (0.7 ml). Two sequential purge cycles were manually triggered. The image was then printed using the Epson® Stylus Color 440 driver for Windows NT® 4.0 Version 3 (driver settings: normal paper, 720 dpi, colour mode, other parameters default). After three minutes the electrochromic electrode was washed with ethanol (p. a.), air dried and assembled.

### Display quality:

The electrochromic electrode was tested in a three electrode system (ref. electrode: Ag/AgCl) for resolution, colouration intensity, switching time and long term stability in acetonitrile/0.2 M LiClO₄ (Figures 5 and 6). Details of the resolution are shown in Figure 9. The neighbouring dots are at the limit of resolution (30 % overlap). The dynamic range for switching a plane black area is larger than 1. The switching time is in the range of 1 s. There is no significant loss of colouration and resolution observed after 72 h in solution.

### Example 2: working electrode with a masked one colour electrochrome print (Case 2)

### Preparation of the conductive glass:

As described in Example 1.

### TiO₂-coating of the conductive glass:

As described in Example 1.

### Preparation of ink for masking:

The n-octylphosphonic acid was prepared according to the literature reference Kosolapoff, G.M., "Isomerization of Alkylphosphites. III. The Synthesis of n-Alkylphosphonic Acids", J. Am. Chem. Soc. (1945) 67, 1180-1182.
A solution of 0.2 M n-octylphosphonic acid in 65 vol% ethylene glycol, 20 vol% methanol and 15 vol% water was prepared.

### Image editing:

A gray scale Windows® bitmap with 300 ppi resolution was converted with Corel Photo Paint (V.9) to 1 bit colour depth using the Jarvis algorithm. The graphic was then imported to CorelDraw® (V.9). Afterwards the white pixels were converted to be transparent and the black pixels were turned to white. Finally, a rectangle of pure yellow was placed behind the bitmap. As a result, a negative 1 bit yellow/white image was obtained.

### Mask printing:

The TiO₂-covered conductive glass 1201 was put into the caddy using the adapter 1202. The pure solvent (65 vol% ethylene glycol, 20 vol% methanol and 15 vol% water) was filled into the vessel 1101 sitting on the yellow connection sleeve. Two sequential purge cycles were manually triggered and followed by a test print. Afterwards the glass plate was washed with acetone and put again into the caddy. This procedure was repeated until the flow of solvent was regulated. The pure solvent was then exchanged with ink for masking (0.7 ml). Two sequential purge cycles were manualy triggered. The image was then printed using the Epson® Stylus Color 440 driver for Windows NT® 4.0 Version 3 (driver settings: normal paper, 720 dpi, colour mode, other parameters default). Afterwards the solvent was removed with a hot-air blower. The printing was repeated twice.

### Development of the positive image:

The plate was immersed into a solution of 0.001 M N-(Phosphono-2-ethyl)-N'-benzyl-4,4'-bipyridinium dibromide in EtOH with 2 vol% water for 15 min, washed with EtOH with 2 vol% water and air dried.

### Display quality:

The electrochromic electrode was tested as described in Example 1. The electrode showed the positive image as expected. The resolution was similar, the contrast slightly lower as compared to Example 1.

### Example 3: Working electrode with a direct positive one colour TiO₂ print (Case 3)

### Preparation of the conductive glass:

As described in Example 1.

### Preparation of the ceramic ink:

3 ml of an aqueous colloidal solution (15 w-% TiO₂ as described in EP 0 958 526 was diluted with 2 ml of a solution of 25 vol% MeOH in distilled water.

### Image editing:

As described in Example 1.

### Ceramic printing (Fig. 1):

The clean conductive glass was put into the caddy using the adapter. The diluted colloidal was filled into the vessel sitting on the cyan conection sleeve. Several sequential purge cycles were manualy triggered. The jet of the colloid was checked before printing. The image was then printed using the Epson® Stylus Color 440 driver for Windows NT® 4.0 Version 3 (driver settings: normal paper, 720 dpi, colour mode, other parameters default). Afterwards the solvent was removed with a hot-air blower. The printing was repeated one time. Finally the plate was fired at 450 °C for 15 min.

### Development of the image:

As described in Example 2.

### Display quality:

The electrochromic electrode was tested as described in Example 1. Details of the resolution are shown in Figure 10. The neighbouring dots are at the limit of resolution (30 % overlap). The dynamic range is slightly smaller then 1. The switching time is in the range of 1 s.
The electrode was used in Example 6 for a closed cell.

### Example 4: Working electrode with a Direct positive two colour electrochromic print (Case 1a)

### Preparation of the conductive glass:

As described in Example 1.

### TiO₂ coating of the conductive glass:

As described in Example 1.

### Preparation of electrochromic inks:

Ink A:
   A solution of 0.025 M N-(Phosphono-2-ethyl)-N'-ethyl-4,4'-bipyridinium dibromide in 65 vol% ethylene glycol, 20 vol% methanol and 15 vol% water was prepared.
Ink B:
   A solution of 0.025 M N,N'-Di(3-hydroxy-4-carboxyphenyl)-4,4'-bipyridinium dichloride in 65 vol% ethylene glycol, 20 vol% methanol and 15 vol% water was prepared.

### Image editing:

Using the conventional Seiko® hardware and driver it is not trivial to plot two colour mixtures of a well defined ratio of the two components ink A and ink B. As a result, the following procedure was applied:

Five squares of 8.466 mm x 8.466 mm were drawn next to each other using CorelDraw® (V. 9). Each square was divided with a 40 x 40 grid corresponding to a 120 dpi resolution using hair style line width. The voids of the grids were filled with cyan and yellow uniformly distributed according to the following ratios: 100 % cyan, 75 % cyan and 25 % yellow, 50 % cyan and 50 % yellow, 25 % cyan and 75 % yellow, 100 % yellow. The grid was defined as top layer.

### Two colour electrochromic printing:

The TiO₂-covered conductive glass was put into the caddy using the adapter. The pure solvent (65 vol% ethylene glycol, 20 vol% methanol and 15 vol% water) was filled into the vessels sitting on the cyan and the yellow conection sleeves. Two sequential purge cycles were manually triggered and followed by a test print. Afterwards the glass plate was washed with acetone and put again into the caddy. This procedure was repeated until solvent flow was regulated and reproducible. The pure solvent was then exchanged with electrochromic ink (0.7 ml). Ink A was filled into the cyan and ink B into the yellow vessel. Two sequential purge cycles were manually triggered. The graphic was then printed using the Epson® Stylus Color 440 driver for Windows NT® 4.0 (V. 3) (driver settings: normal paper, 720 dpi, colour mode, other parameters default). Afterwards the solvent was removed with a hot-air blower. The printing was repeated two times.

### Display quality:

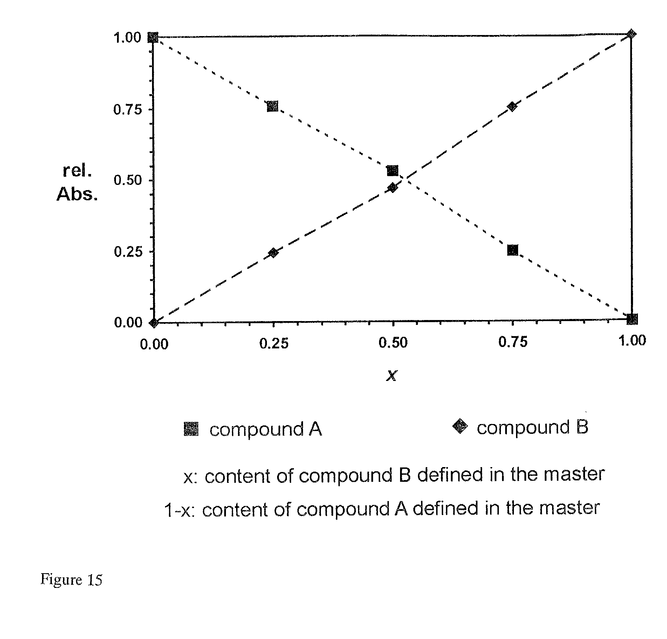

The electrochromic electrode was tested in a three electrode system (ref. electrode: Ag/AgCl) for spectral resolved colouration intensity in acetonitrile/0.2 M LiClO₄ (Figure 15). The experimentally observed spectral distribution corresponds well with the defined ratios in the graphic.

### Example 5: Improved long term stability and molecular enhancement of contrast:

### Preparation of the conductive glass:

Four TEC glasses (30 x 30 mm) were immersed in aqueous NaOH/isopropanol solution for several hours, washed with distilled water and dried.

### TiO₂-coating of the conductive glasses:

As described in Example 1.

### Preparation of the reference plate:

Glass plate no. 1 was treated with a solution of 0.2 M N-(Phosphono-2-ethyl)-N'-benzyl-4,4'-bipyridinium dibromide (I) in 90 vol% ethanol and 10 vol% water. The solution was applied as a thin film on the TiO₂ layer and covered with a clean (normal) glass plate for 10 min. Afterwards the solution was removed with a few ml of a solution of 10 vol% water in ethanol and air dried.

### Preparation of in situ synthesised cross linked electrochromophores:

Glass plates no. 2 to 4 were treated with a solution of 0.2 M N-(Phosphono-2-ethyl)-4,4'-bipyridinium bromide (III) in 90 vol% ethanol and 10 vol% water. The thin film of the solution was applied on the TiO₂ layer and covered with a clean (normal) glass plate for 10 min. Afterwards the solution was removed with a few ml of a solution of 10 vol% water in ethanol and air dried.

For each synthesis step the following procedure was applied:
A 0.2 M solution of a building block or end group (Table 5) in acetonitrile was applied as a thin film on the TiO₂ layer and covered with a clean (normal) glass plate for 30 min at 35 °C. The coated glass plate was then immersed two times for 3 min in acetonitrile and air dried.
Plate no. 2:
   VIII-Br₃ _ VI _ VIII-Br₃ _ XI-methyl
Plate no. 3:
   VIII-Br₃ _ VI _ VII-Br₂ _ XI-methyl
Plate no. 4:
   VII-Br₂ _ VI _ VIII-Br₃ _ XI-methyl

### Dynamic range and persistence:

The electrochromic electrodes were tested in a three electrode system (ref. electrode: Ag/AgCl) for colouration intensity in acetonitrile/0.2 M LiClO₄ (Figure 15) just after preparation and after accelerated ageing in water/ethanol mixtures.

| plate no. | absorbarice (550 nm) after coating | absorbance (550 nm) after accelerated ageing conditions |
|---|---|---|
| 1 | 1.1 | < 0.01 |
| 2 | 2.1 | 0.19 |
| 3 | 1.4 | < 0.01 |
| 4 | 1.3 | 0.15 |

### Example 6: Assembly of an electrochromic display with a TiO₂-jetted switchable print.

A clean TEC glass plate with a hole (∅ = 0.1 mm) in one corner and the electrochromic electrode from Example 3 were glued together with Syrlin® polymer film (Du Pont, 55 µm thickness). For this, thin stripes of Syrlin® polymer film were placed around the printed image and glass beads of 50 µm in diameter were added as spacers. Afterwards, the second glass plate was placed on it and heated at 120 °C. The cell was filled with 0.2 M LiClO₄ and 0.05 M ferrocene in benzonitrile by the vacuum back filling method described in Monk, P.M.S., R.J. Mortimer, and D.R. Rosseinsky, *Electrochromism Fundamentals and Applications*. 1995, Weinheim, New York, Basel, Cambridge, Tokyo: VCH. The cell was stable for more then five months.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. An electrode construction for incorporation into an electrochromic display device comprising:
(i) a substrate;
(ii) an electrochromic material applied to the substrate in a spatially resolved manner **characterised in that** the electrochromic material is (a) applied to the substrate with a resolution of greater than about 75 dpi and (b) the spatial resolution is obtained by a non-photolithographic method.

2. An electrode construction for incorporation into an electrochromic display device comprising:
(i) a substrate;
(ii) a charge storing material applied to the substrate in a spatially resolved manner **characterised in that** the charge storing material is (a) applied to the substrate with a resolution of greater than about 75 dpi and (b) the spatial resolution is obtained by a non-photolithographic method.

3. An electrode construction for incorporation into an electrochromic display device comprising:
(i) a substrate;
(ii) masking material applied to the substrate in a spatially resolved manner **characterised in that** the masking material is (a) applied to the substrate with a resolution of greater than about 75 dpi and (b) the spatial resolution is obtained by a non-photolithographic method.

4. An electrode construction for incorporation into an electrochromic display device comprising:
(i) a substrate;
(ii) an electrochromic material applied to the substrate in a spatially resolved manner with a resolution of greater than about 75 dpi, the spatial resolution being obtained by applying to the substrate by a non-photolithographic method, with a resolution of greater than about 75 dpi, a masking material, the masking material forming a negative the positive of which is subsequently developed by application of the electrochromic material.

5. An electrode construction for incorporation into an electrochromic display device comprising:
(i) a substrate;
(ii) an electrochromic material applied to the substrate in a spatially resolved manner the electrochromic material being (a) applied to the substrate with a resolution of greater than about 75 dpi and (b) the spatial resolution being obtained by a non-photolithographic method; the non-photolithographic method comprising the steps of:
(a) applying masking material over earlier applied electrochromic material;
(b) removing at least some of the electrochromic material which is not masked; and
(c) optionally subsequently removing masking material.

6. An electrode construction for incorporation into an electrochromic display device comprising:
(i) a substrate;
(ii) a large specific surface area material applied to the substrate in a spatially resolved manner **characterised in that** the large specific surface area material is (a) applied to the surface with a resolution of greater than about 75 dpi and (b) the spatial resolution is obtained by a non-photolithographic method.

7. An electrode construction according to claim 6 wherein the large specific area material has a mesoporous morphology.

8. An electrode according to claim 6 or claim 7 wherein the large specific surface area material is a metal oxide.

9. An electrode construction according to any preceding claim wherein the material applied is applied by a printing method.

10. An electrode construction according to claim 9 wherein the material is applied by ink jetting.

11. An electrode construction for incorporation into an electrochromic display device comprising:
(i) a substrate comprised of mesoporous material;
(ii) an electrochromic material applied to the substrate in a spatially resolved manner by ink-jetting.

12. An electrode construction according to any one of claims 6 to 11 wherein the electrochromic material is applied to the large specific surface area material in the same spatially resolved manner.

13. An electrode construction according to claim 1, claim 4, claim 5, claim 11 or claim 12 wherein the electrochromic material anchors fast to the substrate as compared to the lateral motion of the material over the substrate to which it is applied.

14. An electrode construction according to claim 13 wherein the electrochromic material is provided with anchoring groups which act to prevent lateral diffusion of the applied electrochromic material.

15. An electrode construction according to claim 14 wherein the electrochromic material is suitably polymerisable and/or crosslinkable after deposition.

16. An electrode construction according to claim 15 wherein the electrochromic material is polymerisable and/or crosslinkable by cascade reaction.

17. A process for forming an electrode construction which includes the steps of:
(i) providing a substrate;
(ii) applying to the substrate in a spatially resolved manner with a resolution of greater than about 75 dpi and by a non-photolithographic method, one or more of the materials selected from the group consisting of: electrochromic materials, charge storing materials, masking materials and materials for forming mesoporous materials.

18. A process according to claim 17 wherein the process is a multistage one for overprinting one material on another.

19. A process according to claim 18 comprising the steps of printing the mesoporous forming material and overprinting this material with electrochromic material.

20. An assembly adapted to form part of a matrix addressable system comprising:
(i) a subassembly comprising at least two electrode constructions according to any one of claims 1 to 16; and
(ii) a matrix of at least 4 discrete regions of electrochromic material on the subassembly applying the electrochromic material being provided in a spatially resolved manner with a resolution of greater than about 75 dpi and being applied by a non-photolithographic method.

21. An electrode assembly suitable for incorporation into an electrochromic device the assembly comprising at least two working electrodes incorporating an electrode construction according to any one of claims 1 to 16 and at least one counter electrode.

22. An assembly according to claim 21 which is addressable for example by a direct addressing system.

23. An assembly according to claim 21 or claim 22 further comprising addressing means.

24. An assembly comprising at least two working electrodes incorporating an electrode construction according to any one of claims 1 to 16 and at least two counter electrodes, the working and counter electrodes being arranged with respect to each other so that there are at least 4 discrete regions each of which may be subjected to a potential applied across a selected working electrode and a selected counter electrode, electrochromic material being provided on the assembly at each of the four regions.

25. An electrochromic device for the display of an image, the device comprising
(i) a support;
(ii) a working electrode and a counter-electrode arranged on the support;
(iii) discrete amounts of an electrochromic material applied to at least a portion of the working electrode in a spatially resolved pattern and arranged to display the image;
(iv) an electrolyte between the working and the counter electrode
wherein the electrochromic material is (a) applied to the working electrode with a resolution of greater than about 75 dpi and (b) the electrochromic material resolution is obtained by a non-photolithographic method.

26. An electrochromic device for the display of an image, the device comprising
(i) a support;
(ii) a working electrode incorporating an electrode construction according to any one of claims 1 to 16 and a counter electrode arranged on the support;
(iii) an electrolyte between the working and the counter electrode
wherein the image being formed with a resolution of greater than about 75 dpi, the resolution being obtained by a non-photolithographic method.

27. A device according to claim 25 or claim 26 which incorporates matrix address means.

28. A device according to any one of claims 25 to 27 incorporating a dot matrix display.
